# EUROPEAN PATENT APPLICATION

(11) **EP 4 633 001 A1**
(43) Date of publication of application: **15.10.2025**
(21) Application number: 24168889.4
(22) Date of filing: 08.04.2024
(51) Int. Cl.: H02J 13/00

(54) **METHODS AND SYSTEMS FOR OPERATION OF AN ELECTRICAL SYSTEM**

(71) Applicant: Instagrid GmbH, 71636 Ludwigsburg (DE)
(72) Inventor: Gutknecht, Philipp, Mönsheim (DE); Fiedler, Florian, Berlin (DE); Piano, Diego, Markgröningen (DE)
(74) Representative: Eisenführ Speiser

(57) **Abstract**

Electrical systems may include at least one controller configured to activate a first switching element of a first electrical unit, determine whether a second electrical unit is connected to the first electrical unit based on a second switching element of the first electrical unit, and determine whether to operate a loop switching element based on determining whether the second electrical unit is connected, wherein the loop switching element has a first state and a second state, when in the first state, the loop switching element is closed to cause an electrical signal to flow from the first electrical unit to a system controller, and when in the second state, the loop switching element is open to prevent the electrical signal from flowing from the first electrical unit to the system controller. Methods, systems, and computer program products are also disclosed.

## Description

### TECHNICAL FIELD

This disclosure relates generally to aspects of electrical systems such as inverters and power supplies and, in some non-limiting embodiments, to operating an electrical system that includes one or more electrical (e.g., power) units.

### BACKGROUND

A power supply may refer to an electrical device that supplies electrical power to an electrical load. A purpose of a power supply may be to convert electric current from a power source to the correct voltage, current, and frequency to power the load. Some power supplies are standalone pieces of equipment, while others may be built into a load (e.g., appliances) to which the power supply provides power. In some examples, a power supply may be portable, such that the power supply has an internal power storage device, such as a battery, for providing power to a load when other power sources are not available to provide power to the load. Situations where this may be desirable include construction sites, live events, disaster responses, and/or the like.

In some instances, different electrical devices may be required to be connected together, e.g., multiple power supplies connected together to be able to serve the demands of a load. With this, different devices (e.g., power supplies) may be required to be properly connected for purposes of communicating data. In such a situation, each electrical device may be required to be addressed (e.g., have unique addresses assigned to each device).

However, in such situations, much of the information necessary for properly connecting the power supplies may be input by a user, such as through the manual entry of individual addresses. This can be a lengthy process that may lead to inaccurate information being provided. In addition, terminating a network connection (e.g., bus) by, e.g., manually plugging in a network termination is, again an outdated and cumbersome process. Further, this may require a level of understanding with regard to communication protocols and/or proper physical connections that may be beyond the knowledge of the user and/or overly complicated for purposes of the task at hand. Additionally, as the power supplies are used in various different settings, the information may become unavailable (e.g., lost, forgotten, not readily attainable, etc.).

### SUMMARY

Provided are systems, methods, products, apparatuses, and/or devices for operating an electrical system that includes one or more electrical (e.g., power) units.

According to some non-limiting embodiments, provided is an electrical system, that includes a system controller that includes a first data interface; a first bus and a second bus, wherein the first bus and the second bus are connected to system controller via the first data interface; an electrical unit, the electrical unit comprising: a second data interface comprising an input port and an output port; a unit bus section between the input port and the output port; a unit controller that is connected to the unit bus section; and an enumeration detector comprising a receiver circuit connected at the input port; wherein the input port is connected to the first data interface via the first bus and the second bus such that the unit bus section is connected to the first bus, and the receiver circuit is connected to the second bus, thereby providing a communication connection between the system controller and the electrical unit, wherein the communication connection causes the receiver circuit to provide a signal to the unit controller, wherein the signal is indicative of the system controller being connected upstream of the electrical unit, which enables an electrical connection at the output port which is usable by another electrical unit for detecting a connection to the electrical unit.

According to some non-limiting embodiments, there can also be provided an electrical system, that includes a system controller that includes a first data interface; and a second bus, wherein the second bus is connected to system controller via the first data interface; an electrical unit, the electrical unit comprising: a second data interface comprising an input port and an output port; a unit controller; and an enumeration detector comprising a receiver circuit connected at the input port; wherein the input port is connected to the first data interface via the second bus such that the receiver circuit is connected to the second bus, thereby providing a communication connection between the system controller and the electrical unit, wherein the communication connection causes the receiver circuit to provide a signal to the unit controller, wherein the signal is indicative of the system controller being connected upstream of the electrical unit, which enables an electrical connection at the output port which is usable by another electrical unit for detecting a connection to the electrical unit. In some non-limiting embodiments, the electrical system may also comprise a first bus which is connected to system controller, e.g., via the first data interface. In some non-limiting embodiments, the unit controller may comprise a unit bus section at which the unit controller that is operatively connected. The unit bus section may be connected to the first bus for facilitating a communicative (e.g., bidirectional) connection between the system controller and the unit controller. In some non-limiting embodiments, the unit bus section may at least partially be provided between the input port and the output port such that a connection to the first bus is also possible via the output port (e.g., for connecting another electrical unit of the same- or different type).

In some non-limiting embodiments, the enumeration detector may include a sender circuit, and wherein the unit controller is configured to activate the sender circuit based on receiving the signal.

In some non-limiting embodiments, the receiver circuit may include an optocoupler.

In some non-limiting embodiments, the enumeration detector may include a driver switching element, wherein the signal is a first signal, and the unit controller or the system controller may be configured to: activate the driver switching element based on receiving the first signal from the receiver circuit; determine whether to operate a loop switching element of the electrical unit based on determining whether another electrical unit is connected, wherein the loop switching element has a first state and a second state, wherein, when in the first state, the loop switching element is closed to provide an electrical signal path between the electrical unit and the system controller to cause a second signal to flow from the electrical unit to the system controller, wherein, when in the second state, the loop switching element is open to prevent the second signal from flowing in the electrical signal path from the electrical unit to the system controller.

In some non-limiting embodiments, when determining whether another electrical unit is connected to the electrical unit at the output port of the electrical unit, the unit controller or the system controller may be further configured to: determine that another electrical unit is connected to the electrical unit at the output port of the electrical unit based on a first output of a detector element of the electrical unit, wherein the first output of the detector element is indicative of electrical current flowing through the detector element; or determine that another electrical unit is not connected to the electrical unit at the output port of the electrical unit based on a second output of the detector element of the electrical unit, wherein the second output of the detector element is indicative of electrical current not flowing through the detector element.

In some non-limiting embodiments, the driver switching element or the detector element comprises an optocoupler.

In some non-limiting embodiments, when determining whether to operate the loop switching element of the electrical unit based on determining whether another electrical unit is connected, the unit controller or the system controller may be further configured to: determine to operate the loop switching element of the electrical unit so that the loop switching element is in the first state to provide the electrical signal path between the electrical unit and the system controller and to cause the second signal to flow from the electrical unit to the system controller via the electrical signal path based on determining that another electrical unit is not connected at the output port of the electrical unit; or determine not to operate the loop switching element of the electrical unit so that the loop switching element is in in the second state to prevent the second signal from flowing from the electrical unit to the system controller based on determining that another electrical unit is connected at the output port of the electrical unit.

In some non-limiting embodiments, the unit controller may be further configured to: receive a message from the system controller, wherein the message includes addressing information that causes the unit controller to assign an address to the electrical unit based on a signal line of the input port being energized.

In some non-limiting embodiments, the unit controller may be further configured to: activate an output port of the second data interface of the electrical unit based on receiving a message directed to the address of the electrical unit, wherein the message includes activation information that causes wherein the unit controller to activate the output port of the electrical unit.

In some non-limiting embodiments, the system controller may be further configured to: activate a power supply line of the first bus that connects the system controller to the electrical unit; and provide an initial signal on a signal line of the second bus to the receiver circuit to cause the receiver circuit to provide the signal to the unit controller.

In some non-limiting embodiments, the signal line of the second bus may be a first signal line of the second bus, the signal may be a first signal, and the system controller may be further configured to: receive a second signal on a second signal line of the second bus; and determine that a scheduling scheme has been completed based on receiving the second signal.

In some non-limiting embodiments, the system controller may be further configured to: activate a bus signal line of the first bus; and transmit a first message to the electrical unit, wherein the first message includes addressing information that causes the electrical unit to assign a first address to the electrical unit based on the bus signal line of the first bus being active.

In some non-limiting embodiments, the system controller may be further configured to: deactivate the bus signal line of the first bus that connects the system controller to the input port of the electrical unit; and transmit a second message to the electrical unit, wherein the second message includes activation information that causes the electrical unit to activate an output port of the electrical unit.

In some non-limiting embodiments, the electrical unit may be a first electrical unit, and the system controller may be further configured to: transmit a third message, wherein the third message includes second addressing information that causes a second electrical unit to assign a second address to the second electrical unit.

According to some non-limiting embodiments, provided is a method for operating an electrical system, that includes receiving, with at least one processor of an electrical unit of an electrical system, data associated with a first electrical signal provided on a first electrical signal path of a bus, wherein the electrical unit is connected to and in communication with a system controller of the electrical system via the bus; activating, with the at least one processor, a driver switching element of the electrical unit based on receiving the first electrical signal on the first electrical signal path from the system controller; determining, with the at least one processor, whether another electrical unit is connected to the electrical unit at an output port of the electrical unit based on a detector element of the electrical unit; and determining, with the at least one processor, whether to operate a loop switching element of the electrical unit based on determining whether another electrical unit is connected, wherein the loop switching element has a first state and a second state, wherein, when in the first state, the loop switching element is closed to provide a second electrical signal path between the electrical unit and the system controller to cause a second electrical signal to flow from the electrical unit to the system controller, and wherein, when in the second state, the loop switching element is open to prevent the second electrical signal from flowing in the second electrical signal path from the electrical unit to the system controller.

In some non-limiting embodiments, determining whether another electrical unit is connected to the electrical unit at the output port of the electrical unit may include determining that another electrical unit is connected to the electrical unit at the output port of the electrical unit based on a first output of the driver switching element of the electrical unit, the first output of the driver switching element may be indicative of electrical current flowing through the driver switching element.

In some non-limiting embodiments, determining whether another electrical unit is connected to the electrical unit at the output port of the electrical unit may include determining that another electrical unit is not connected to the electrical unit at the output port of the electrical unit based on a second output of the driver switching element of the electrical unit, wherein the second output of the driver switching element is indicative of electrical current not flowing through the driver switching element.

In some non-limiting embodiments, determining whether to operate the detector element of the electrical unit based on determining whether another electrical unit is connected may include determining to operate the detector element of the electrical unit to provide the second electrical signal path between the electrical unit and the system controller to cause the second electrical signal to flow from the electrical unit to the system controller based on determining that another electrical unit is not connected at the output port of the electrical unit.

In some non-limiting embodiments, the method may further include receiving, at an input port of a data interface of the electrical unit, a message from the system controller, the message may include addressing information that causes the electrical unit to assign an address to the electrical unit based on a signal line of the input port being energized.

In some non-limiting embodiments, the method may further include activating an output port of the data interface of the electrical unit based on receiving a message directed to the address of the electrical unit, wherein the message includes activation information that causes the electrical unit to activate the output port of the electrical unit.

According to some non-limiting embodiments, provided is an electrical system that includes a controller configured to: activate a driver switching element of an electrical unit based on receiving data associated with a first signal provided on a first electrical signal path of a bus of the electrical system; determine whether another electrical unit is connected to the electrical unit based on the driver switching element; and determine whether to operate a loop switching element of the electrical unit based on determining whether another electrical unit is connected to the electrical unit, wherein the loop switching element has a first state and a second state, wherein, when in the first state, the loop switching element is closed to provide a second electrical signal path between the electrical unit and the system controller to cause a second signal to flow from the electrical unit to a system controller of the electrical system, and wherein, when in the second state, the loop switching element is open to prevent the second signal from flowing in the second electrical signal path from the electrical unit to the system controller.

In some non-limiting embodiments, when determining whether another electrical unit is connected to the electrical unit at the output port of the electrical unit, the controller may be configured to: determine that another electrical unit is connected to the electrical unit at the output port of the electrical unit based on a first output of a detector element of the electrical unit, wherein the detector element is connected to the driver switching element and receives an electrical current from the driver switching element when the driver switching element is activated, and wherein the first output of the detector element is indicative of electrical current flowing through the driver switching element; or determine that another electrical unit is not connected to the electrical unit at the output port of the electrical unit based on a second output of the detector element of the electrical unit, wherein the second output of the detector element is indicative of electrical current not flowing through the detector element.

In some non-limiting embodiments, when determining whether to operate the loop switching element of the electrical unit based on determining whether another electrical unit is connected, the controller may be configured to: determine to operate the loop switching element of the electrical unit so that the loop switching element is in the first state to provide the second electrical signal path between the electrical unit and the system controller and to cause the second electrical signal to flow from the electrical unit to the system controller based on determining that another electrical unit is not connected at the output port of the electrical unit; or determine not to operate the loop switching element of the electrical unit so that the loop switching element is in in the second state to prevent the second electrical signal from flowing from the electrical unit to the system controller based on determining that another electrical unit is connected at the output port of the electrical unit.

These and other features and characteristics of the present disclosure, as well as the methods of operation and functions of the related elements of structures and the combination of parts and economies of manufacture, will become more apparent upon consideration of the following description and the appended claims with reference to the accompanying drawings, all of which form a part of this specification, wherein like reference numerals designate corresponding parts in the various figures. It is to be expressly understood, however, that the drawings are for the purpose of illustration and description only and are not intended as a definition of the limits of the disclosed subject matter.

### BRIEF DESCRIPTION OF THE DRAWINGS

Additional advantages and details are explained in greater detail below with reference to the exemplary embodiments that are illustrated in the accompanying figures, in which:

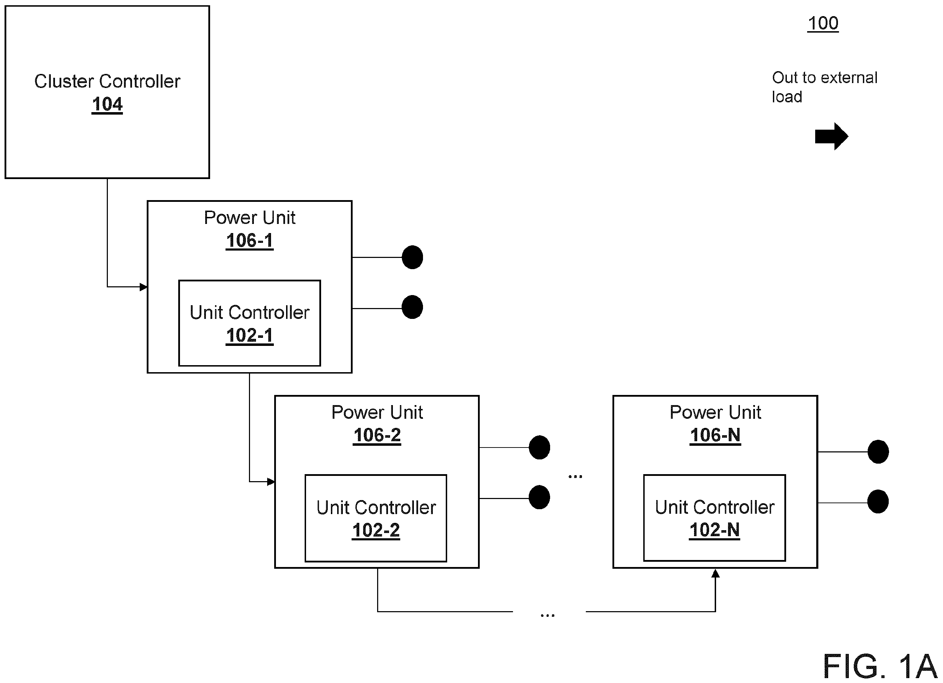

FIG. 1A is a diagram of a non-limiting embodiment of an environment in which systems, methods, and/or products, described herein, may be implemented;

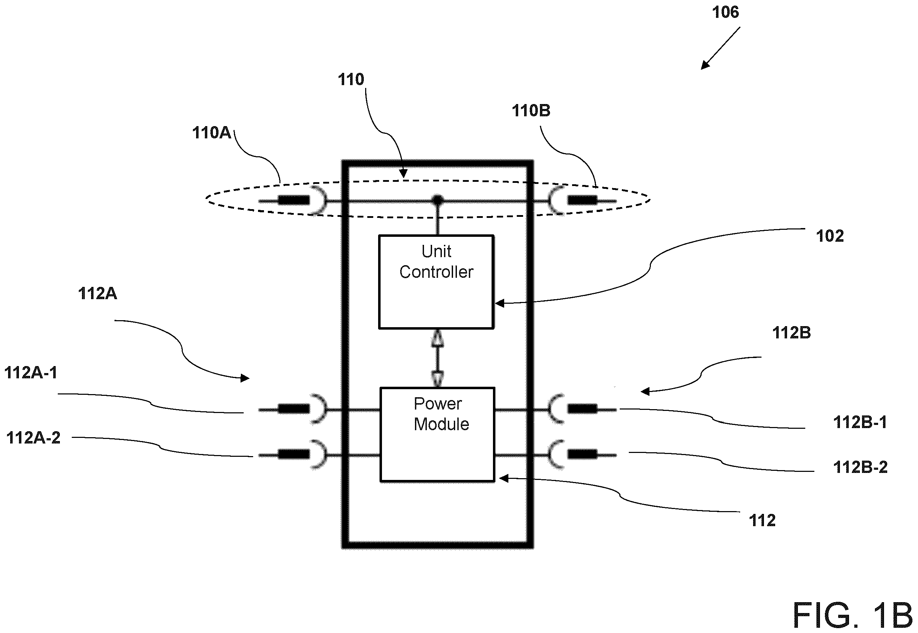

FIG. 1B is a schematic diagram of a non-limiting embodiment of a power unit;

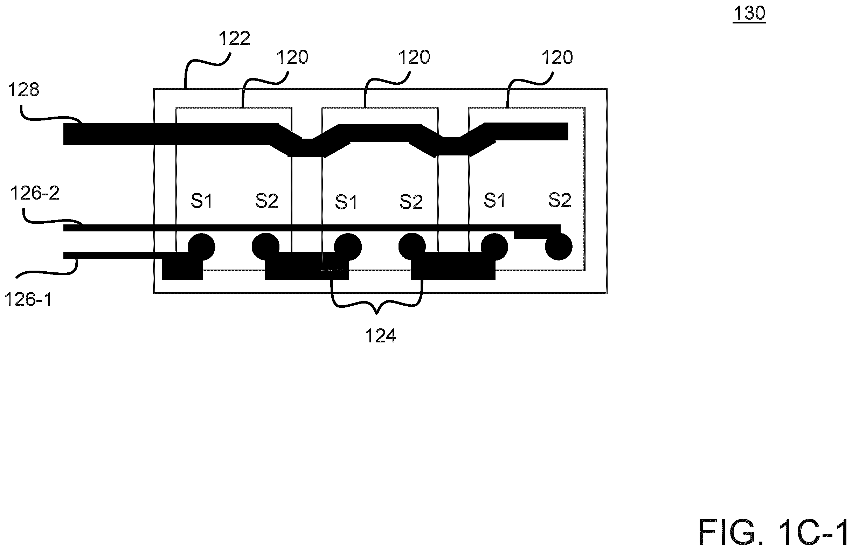

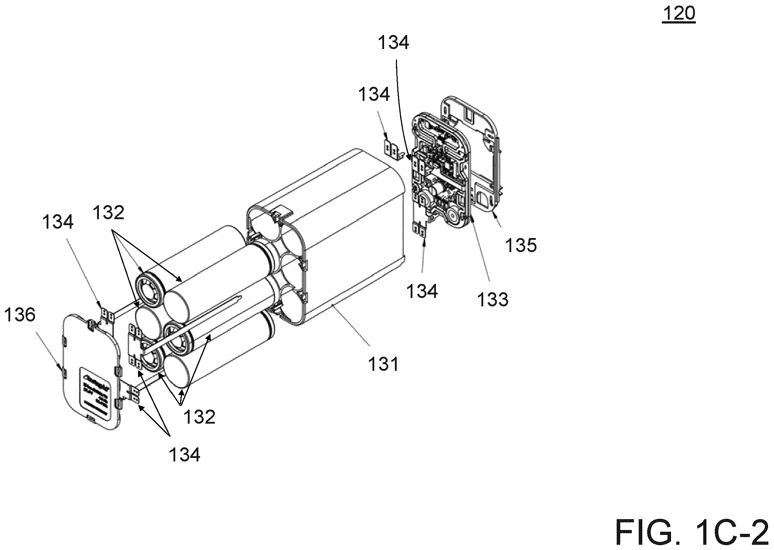

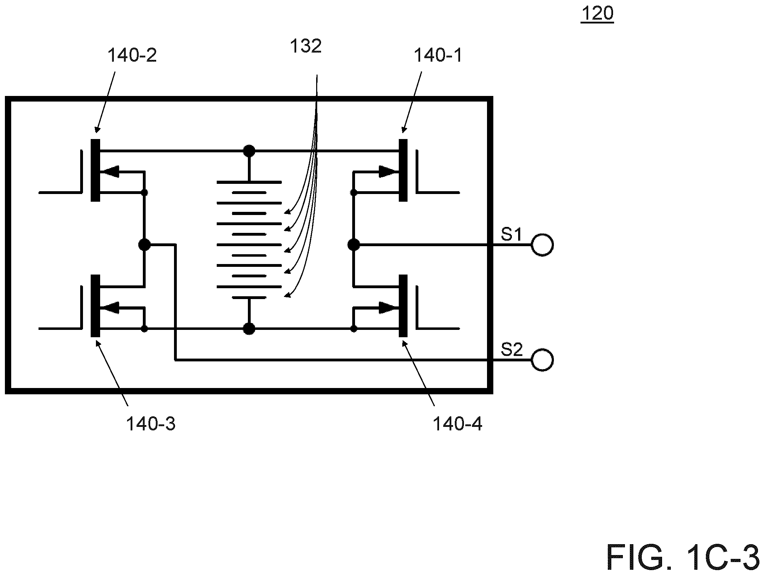

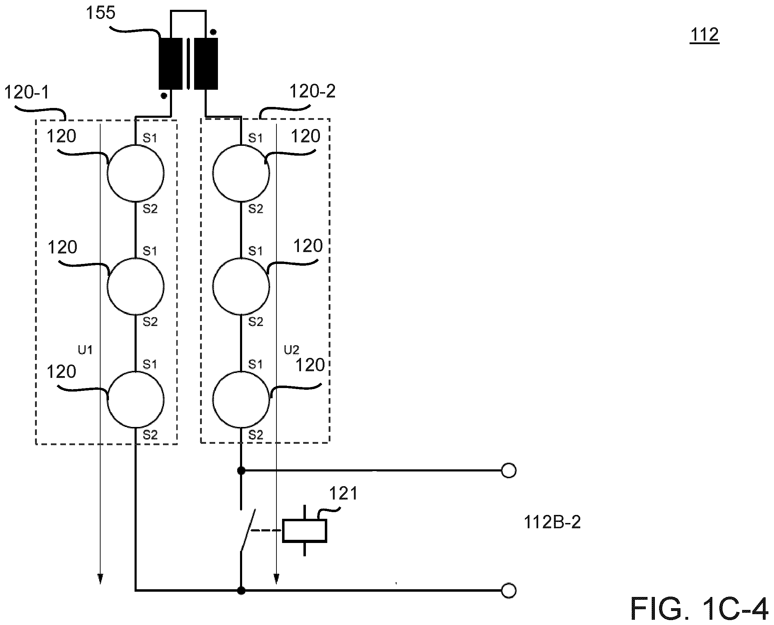

FIG. 1C-1 is a schematic diagram of a non-limiting embodiment of an energy storage module container of a power unit;
FIG. 1C-2 is a schematic diagram of a non-limiting embodiment of an energy storage module of the power unit shown in FIG. 1B;
FIG. 1C-3 is a schematic diagram of a non-limiting embodiment of an energy storage module of the power unit shown in FIG. 1B;
FIG. 1C-4 is a schematic diagram of a non-limiting embodiment of a power module of the power unit shown in FIG. 1B;
FIG. 2 is a flowchart of a non-limiting embodiment of a process for scheduling one or more power units of an electrical system;
FIG. 3 is a flowchart of a non-limiting embodiment of a process for addressing one or more power units of an electrical system;
FIGS. 4A-4B is an overview of an implementation of an electrical system that provides for operating one or more power units as described herein;
FIGS. 5A-5C are schematic diagrams of non-limiting embodiments of connection configurations of power units of an electrical system;
FIG. 6 is a diagram of a non-limiting embodiment of a computing device;
FIG. 7A is a diagram of an implementation of a process for scheduling one or more power units of an electrical system; and
FIG. 7B is a diagram of an implementation of a process for addressing one or more power units of an electrical system.

### DETAILED DESCRIPTION

It is to be understood that the present disclosure may assume various alternative variations and step sequences, except where expressly specified to the contrary. It is also to be understood that the specific devices and processes illustrated in the attached drawings, and described in the following specification, are simply exemplary and non-limiting embodiments. Hence, specific dimensions and other physical characteristics related to the embodiments disclosed herein are not to be considered as limiting.

No aspect, component, element, structure, act, step, function, instruction, and/or the like used herein should be construed as critical or essential unless explicitly described as such. Also, as used herein, the articles "a" and "an" are intended to include one or more items and may be used interchangeably with "one or more" and "at least one." As used in the specification and the claims, the singular form of "a," "an," and "the" include plural referents, such as unless the context clearly dictates otherwise. Additionally, as used herein, the terms "set" and "group" are intended to include one or more items (e.g., related items, unrelated items, a combination of related and unrelated items, etc.) and may be used interchangeably with "one or more" or "at least one." Where only one item is intended, the term "one" or similar language is used. Also, as used herein, the terms "has," "have," "having," or the like are intended to be open-ended terms. Further, the phrase "based on" is intended to mean "based at least partially on" unless explicitly stated otherwise. Further, the phrase "based on" is intended to mean "based at least partially on" unless explicitly stated otherwise. Further, the phrase "based on" may mean "in response to" and be indicative of a condition for automatically triggering a specified operation of an electronic device (e.g., a processor, a controller, a computing device, etc.) as appropriately referred to herein.

It will be apparent that systems and/or methods, described herein, can be implemented in different forms of hardware (e.g., electrical circuitry), software, or a combination of hardware and software. The actual specialized control hardware or software code used to implement these systems and/or methods is not limiting of the implementations. Thus, the operation and behavior of the systems and/or methods are described herein without reference to specific software code, it being understood that software and hardware can be designed to implement the systems and/or methods based on the description herein.

The present disclosure provides systems and methods for operating an electrical system that may include one or more power units. In some non-limiting embodiments, the present disclosure includes an electrical system that may include a system controller, a first bus and a second bus, and a power unit. In some non-limiting embodiments, the system controller may include a first data interface and the first bus, and the second bus may be connected to system controller via the first data interface. In some non-limiting embodiments, the power unit may include a second data interface that includes an input port and an output port, a unit bus section between the input port and the output port, a receiver circuit connected to the input port, a unit controller that is connected to the unit bus section, an enumeration detector that includes a receiver circuit connected at the input port.

In some non-limiting embodiments, the input port may be connected to the first data interface via the first bus and the second bus, such that the unit bus section is connected to the first bus and the receiver circuit is connected to the second bus, thereby providing a communication connection between the system controller and the power unit. In some non-limiting embodiments, the communication connection causes the receiver circuit to provide a signal to the unit controller, where the signal is indicative of the system controller being connected upstream of the power unit, which enables an electrical connection at the output port which is usable by another power unit for detecting a connection to the power unit.

In some non-limiting embodiments, the enumeration detector may include a sender circuit, and the unit controller may be configured to activate the sender circuit based on receiving the signal. In some non-limiting embodiments, the receiver circuit may include an optocoupler. In some non-limiting embodiments, the enumeration detector may include a driver switching element, the signal may be a first signal, and the unit controller and/or the system controller may be configured to activate the driver switching element based on receiving the first signal from the receiver circuit, determine whether to operate a loop switching element of the power unit based on determining whether another power unit is connected. In some non-limiting embodiments, the loop switching element may have a first state and a second state. In some non-limiting embodiments, when in the first state, the loop switching element is closed to provide an electrical signal path between the power unit and the system controller to cause a second signal to flow from the power unit to the system controller. In some non-limiting embodiments, when in the second state, the loop switching element is open to prevent the second signal from flowing in the electrical signal path from the power unit to the system controller.

In some non-limiting embodiments, when determining whether another power unit is connected to the power unit at the output port of the power unit, the unit controller or the system controller may be configured to determine that another power unit is connected to the power unit at the output port of the power unit based on a first output of a detector element of the power unit, wherein the first output of the detector element is indicative of electrical current flowing through the detector element, or determine that another power unit is not connected to the power unit at the output port of the power unit based on a second output of the detector element of the power unit, wherein the second output of the detector element is indicative of electrical current not flowing through the detector element. In some non-limiting embodiments, the driver switching element and/or the detector element may include an optocoupler.

In some non-limiting embodiments, when determining whether to operate the loop switching element of the power unit, the unit controller and/or the system controller may be configured to determine to operate the loop switching element of the power unit so that the loop switching element is in the first state to provide the electrical signal path between the power unit and the system controller and to cause the second signal to flow from the power unit to the system controller via the electrical signal path based on determining that another power unit is not connected at the output port of the power unit, or determine not to operate the loop switching element of the power unit so that the loop switching element is in in the second state to prevent the second signal from flowing from the power unit to the system controller based on determining that another power unit is connected at the output port of the power unit.

In some non-limiting embodiments, the unit controller may be further configured to receive a message from the system controller, wherein the message includes addressing information that causes the unit controller to assign an address to the power unit based on a signal line of the input port being energized. In some non-limiting embodiments, the unit controller may be further configured to activate an output port of the second data interface of the power unit based on receiving a message directed to the address of the power unit, wherein the message includes activation information that causes wherein the unit controller to activate the output port of the power unit.

In some non-limiting embodiments, the system controller may be further configured to activate a power supply line of the first bus that connects the system controller to the power unit and provide an initial signal on a signal line of the second bus to the receiver circuit to cause the receiver circuit to provide the signal to the unit controller. In some non-limiting embodiments, the signal line of the second bus is a first signal line of the second bus, the signal may be a first signal, and the system controller may be further configured to receive a second signal on a second signal line of the second bus and determine that a scheduling scheme has been completed based on receiving the second signal.

In some non-limiting embodiments, the system controller is further configured to activate a bus signal line of the first bus and transmit a first message to the power unit, wherein the first message includes addressing information that causes the power unit to assign a first address to the power unit based on the bus signal line of the first bus being active. In some non-limiting embodiments, the system controller is further configured to deactivate the bus signal line of the first bus that connects the system controller to the input port of the power unit and transmit a second message to the power unit, wherein the second message includes activation information that causes the power unit to activate an output port of the power unit.

In some non-limiting embodiments, the power unit is a first power unit, and the system controller is further configured to transmit a third message, wherein the third message includes second addressing information that causes a second power unit to assign a second address to the second power unit.

In this way, non-limiting embodiments of the present disclosure provide an electrical system that reduces the amount of information necessary for properly connecting a system controller and one or more power units. Furthermore, the electrical system may reduce instances of inaccurate information being provided and reduces the need of a user to have a level of understanding with regard to communication protocols and/or proper physical connections, of which the user may not be aware.

Referring now to FIG. 1A, FIG. 1A is a diagram of an electrical power system, shown in this example as an electrical system 100 in which systems, methods, products, apparatuses, and/or devices described herein, may be implemented. As shown in FIG. 1A, electrical system 100 may be a distributed electrical system that includes cluster controller 104, which may act as a system controller with respect to electrical system 100, and a plurality of electrical units, shown in this embodiment as power units 106-1 through 106-N (e.g., referred to individually as power unit 106 and collectively as power units 106, where appropriate), each of power units 106-1 through 106-N may be uniquely addressable and/or controllable by cluster controller 104. Although not shown explicitly in the example of FIG. 1A, the system 100 could also include devices which are not required to be addressed (e.g., which do not need enumeration). It shall be appreciated that such devices may just act as a gateway (e.g., a device configured to pass an addressing token to another device in the system). The variable "N" refers to an arbitrary number that is the last of the power units 106 and may be any positive integer (e.g., 2, 3, 4, 5, 6, etc.). As further shown in FIG. 1A, cluster controller 104 may be connected to power unit 106-1, power unit 106-1 may be connected to power unit 106-2, and power unit 106-2 may be connected to power unit 106-N. In some non-limiting embodiments, cluster controller 104, power unit 106-1, power unit 106-2, and power unit 106-N may be connected via an internal communication network, such as a bus that has a bus standard which defines a communication protocol for messaging on the bus. For example, cluster controller 104, power unit 106-1, power unit 106-2, and power unit 106-N may be connected via a digital bus, e.g., a controller area network (CAN) bus and a CAN bus protocol may be used for messaging. Additionally, non-limiting embodiments of operating (e.g., controlling) electrical system 100 are described herein, which may include scheduling (e.g., determining a connection order of) one or more power units 106 of electrical system 100 and/or addressing one or more power units 106 of electrical system 100.

In some non-limiting embodiments, electrical system 100 may be a self-contained unit. For example, all or some components of electrical system 100 may be positioned within an enclosure (e.g., a single enclosure, such as a housing). In some non-limiting embodiments, electrical system 100 may be sized and configured to be portable. Examples of electrical systems that may be portable are described in United States Patent Application Publication No. 2022/0360094, the disclosure of which is incorporated by reference herein in its entirety, United States Patent Provisional Patent Application Serial No. 63/556,996, the disclosure of which is incorporated by reference herein in its entirety, and European Patent Application No. 24161854.5, the disclosure of which is incorporated by reference herein in its entirety. In some examples, electrical system 100 may be sized and configured to be carried by a person. In another example, electrical system 100 may be sized and configured to be positioned on a cart, a trailer, a vehicle, and/or the like. In some non-limiting embodiments, electrical system 100 may be configured to provide an output power in a range within kilowatt (kW) to a few megawatts (MW) range, e.g., 1 kW to 1000 kW, or 2 kWto 800 kW. In some non-limiting embodiments, electrical system 100 may be configured as an electrical inverter system, an electrical system, and/or the like. Accordingly, electrical system 100 may allow for providing power at any location (e.g., even if utility (e.g., mains) electric power is not readily available or accessible). Even when mains electric power is available, electrical system 100 may allow for providing electric power to prevent interruptions in power (e.g., used as an uninterruptable power supply (UPS)) and/or to condition power (e.g., as the output power is controllable/selectable, devices connected to an electrical system according to the disclosed subject matter may receive well-conditioned power that is free from voltage spikes, current surges, interruptions or reductions in power, and/or the like, which may occur from time to time with mains electric power).

Unit controller 102 may include one or more devices capable of controlling components of power unit 106 (e.g., electrical components of power unit 106). For example unit controller 102 may include one or more electrical components that make up one or more circuits, one or more processors, one or more controllers, one or more computing devices, and/or other like devices. A few non-limiting examples include: microprocessor, microcontroller, application specific integrated circuit (ASIC), their likes or combinations. In some non-limiting embodiments, unit controller 102 may be configured to activate and/or deactivate one or more electrical components of power unit 106. In some non-limiting embodiments, unit controller 102 may be part of cluster controller 104. In some non-limiting embodiments, cluster controller 104 may include unit controller 102. For example, cluster controller 104 may include one or more electrical components of unit controller 102.

Cluster controller 104 may include one or more devices capable of communicating with and/or controlling power units 106. For example, cluster controller 104 may include a circuit, a processor, a controller, a computing device, and/or other like devices. A few non-limiting examples include: microprocessor, microcontroller, application specific integrated circuit (ASIC), their likes or combinations. In some non-limiting embodiments, cluster controller 104 may be configured to receive data associated with measurements (e.g., current and/or voltage measurements), process the data (e.g., perform operations on the data, compare results of the operations, etc.), and/or provide signals (e.g., control signals) to power units 106 to cause generation of voltage and/or current within electrical system 100 to continue and/or cease. In some non-limiting embodiments, cluster controller 104 may be configured to deactivate electrical system 100. In some non-limiting embodiments, cluster controller 104 may include other components of electrical system 100, or cluster controller 104 may be a part of other components of electrical system 100.

Power unit 106 may include one or more devices capable of communicating with cluster controller 104 and supplying power to a load. For example, power unit 106 may include a circuit, a processor, a controller, a computing device, and/or other like devices. A few non-limiting examples include: microprocessor, microcontroller, application specific integrated circuit (ASIC), their likes or combinations. Additionally or alternatively, power unit 106 may include a power source. For example, power unit 106 may include an electrical energy storage element, such as a battery, an accumulator, super capacitor and/or the like or any of their combination, that is rechargeable for storing power that can be later discharged. In some non-limiting embodiments, power unit 106 may include components (e.g., circuitry) to control the parameters of power (e.g., in the form of a power signal) provided to the power source of power unit 106. In some non-limiting embodiments, power unit 106 may include other components of electrical system 100, such as cluster controller 104, or power unit 106 may be a part of other components of electrical system 100.

The number and arrangement of devices and systems shown in FIG. 1A is provided as an example. There may be additional devices and/or systems, fewer devices and/or systems, different devices and/or systems, or differently arranged devices and/or systems than those shown in FIG. 1A. Furthermore, two or more devices and/or systems shown in FIG. 1A may be implemented within a single device and/or system, or a single device and/or system shown in FIG. 1A may be implemented as multiple, distributed devices and/or systems. Additionally or alternatively, a set of devices and/or systems (e.g., one or more devices or systems) of electrical system 100 may perform one or more functions described as being performed by another set of devices and/or systems of electrical system 100.

Referring now to FIG. 1B, FIG. 1B is a diagram of a non-limiting embodiment of power unit 106. As shown in FIG. 1B, power unit 106 may include unit controller 102, data interface 110, and power module 112. In some non-limiting embodiments, power unit 106 may be a self-contained unit. For example, all or some components of power unit 106 may be positioned within an enclosure (e.g., a single enclosure, such as a housing). In some non-limiting embodiments, power unit 106 may be sized and configured to be portable. In some examples, power unit 106 may be sized and configured to be carried by a person. In another example, power unit 106 may be sized and configured to be positioned on a cart, a trailer, a vehicle, and/or the like. In some non-limiting embodiments, one power unit 106 may be configured to provide an output power in kW to a few megawatt (MW) range, e.g., 1 kW to 1000 kW, or 2 kW to 800 kW.

In some non-limiting embodiments, data interface 110 may include input port 110A and/or output port 110B. In some non-limiting embodiments, data interface 110 may include a digital bus, such as controller area network (CAN) bus, or any suitable multi-wire (e.g., two-wire) communication interface. In some non-limiting embodiments, data interface 110 may include a bus having a configuration that is the same as or similar to a CAN bus. For example, data interface 110 may include a bus having one or more signal lines that are the same as or similar to a CAN bus. In some non-limiting embodiments, input port 110A and/or output port 110B may include connections for each signal line of a bus, such as a CAN bus or a similar bus configuration.

In some examples, data interface 110 may allow power unit 106 to exchange information (e.g., control information, such as control signals) with cluster controller 104. For example, data interface 110 may allow power unit 106 to exchange information with cluster controller 104 via a corresponding data interface of cluster controller 104. In such an example, input port 110A of data interface 110 receives information from and/or transmits information to a corresponding data interface of cluster controller 104. In some non-limiting embodiments, data interface 110 may allow power unit 106 to exchange messages (e.g., messages according to a CAN bus protocol) with cluster controller 104.

In some examples, data interface 110 may allow power units 106 to exchange or transfer information (e.g., information received from cluster controller 104) with or between other power units 106. For example, data interface 110 may allow power unit 106-1 to exchange information with power unit 106-2 and/or power unit 106-N via a corresponding data interface of power unit 106-2 and/or power unit 106-N. As one example, input port 110A of data interface 110 may receive information from and/or transmit information to output port 110B of data interface 110 of power unit 106-2 and/or power unit 106-N. In some non-limiting embodiments, data interface 110 may be configured to pass information between units. For example, output port 110B of data interface 110 of power unit 106-1 may be connected to input port 110A of data interface 110 of power unit 106-2, and output port 110B of data interface 110 of power unit 106-2 may be connected to input port 110A of data interface 110 of power unit 106-N. In this example, power unit 106-1 may provide information to power unit 106-2 via corresponding data interfaces and power unit 106-2 may provide information to power unit 106-N via corresponding data interfaces. The information provided to power unit 106-N by power unit 106-2 may be the same as the information provided to power unit 106-2 by power unit 106-1.

In some non-limiting embodiments, a low voltage, such as a voltage in the range between 3V and 60V, such as 5V, 9V, 12V, 15V, 24V, 48V, 50 V, 54 V, or 60 V may be supplied to power unit 106 via data interface 110 (e.g., supplied via a bus signal line that is connected to input port 110A of data interface 110). In some non-limiting embodiments, the low voltage supplied via data interface 110 may be used to activate (e.g., start, power up, initiate a scheduling scheme and/or an addressing scheme, etc.) power unit 106.

In some non-limiting embodiments, data interface 110 may be isolated (e.g., electrically isolated) from other components of power unit 106 for safety reasons. In this way, data interface 110 may be protected from dangerous situations that could result in damage to data interface 110 or other components in contact with data interface 110 and/or individuals that may be in contact with data interface 110.

In some non-limiting embodiments, cluster controller 104 may include a data interface that is the same as or similar to data interface 110. For example, cluster controller 104 may include a data interface that is the same as or similar to data interface 110. In some non-limiting embodiments, the data interface of cluster controller 104 may include an output port (e.g., the same as or similar to output port 110B) that is connected to input port 110A of data interface 110.

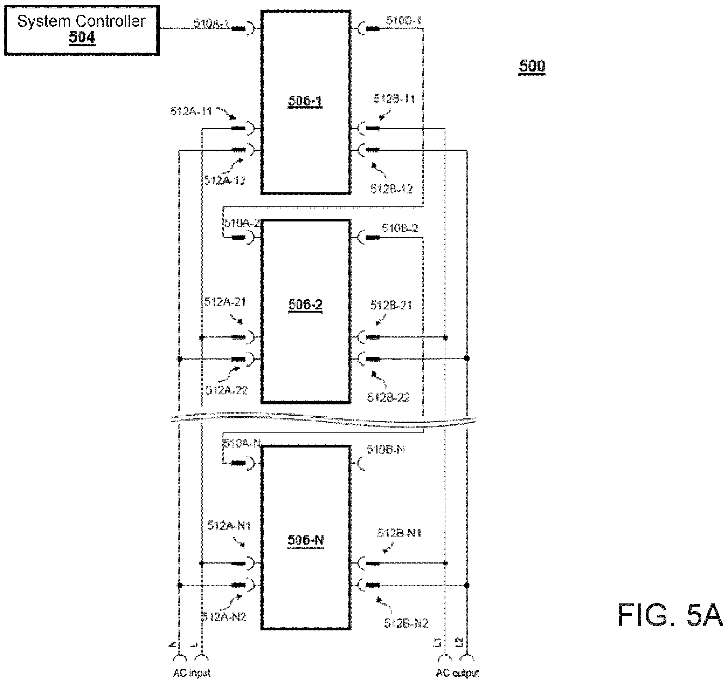

In some non-limiting embodiments, power module 112 may include input connection 112A and output connection 112B. In some non-limiting embodiments, input connection 112A may include first input line 112A-1 and second input line 112A-2. In some non-limiting embodiments, first input line 112A-1 may be energized, and second input line 112A-2 may be energized to provide a voltage potential between first input line 112A-1 and second input line 112A-2. In some non-limiting embodiments, input connection 112A may include one or more components that allow power module 112 (e.g., a power source, such as a battery module, within power module 112) to receive power provided to power unit 106. For example, input connection 112A may include one or more components that allow power module 112 to receive power provided to power unit 106 during a charging scenario. In some non-limiting embodiments, output connection 112B may include first output line 112B-1 and second output line 112B-2. In some non-limiting embodiments, output connection 112B may include one or more components that allow power module 112 (e.g., a power source, such as a battery module, within power module 112) to provide power from power unit 106. For example, output connection 112B may include one or more components that allow power module 112 to provide power to a load connected to power unit 106 during a load feeding scenario. In some non-limiting embodiments, input connection 112A and/or output connection 112B of power module 112 of power unit 106 may be connected with other input connection 112A and/or output connection 112B of power module 112 of other power units 106 so that various power provisioning scenarios can be provided. Examples of such scenarios are described with regard to FIGS. 5A-5C.

Referring now to FIG. 1C-1, FIG. 1C-1 is a schematic diagram of a non-limiting embodiment of energy storage module container 130 of power unit 106. In some non-limiting embodiments, energy storage module container 130 may be the same as or similar to power module 112. As shown in FIG. 1C-1 energy storage module container 130 may include at least one energy storage module 120 (e.g., a plurality or energy storage modules 120, a set of energy storage modules 120, and/or the like of), housing 122, bar connections 124, first electrical connection 126-1 and second electrical connection 126-2 (collectively referred to as "electrical connections 126" and individually referred to as "electrical connection 126"), and/or communication connection 128. The number and arrangement of components shown are provided as an example. In some non-limiting embodiments, energy storage module container 130 may include additional components, fewer components, different components, or differently arranged components than those shown. Additionally or alternatively, a set of components (e.g., one or more components) of energy storage module container 130 may perform one or more functions described as being performed by another set of components of energy storage module container 130.

In some non-limiting embodiments, housing 122 may include plastic, metal, any combination thereof, and/or the like. For example, housing 122 may include a plastic housing. In some non-limiting embodiments, housing 122 may be configured to hold at least one (e.g., a plurality of, a set of, and/or the like) energy storage modules 120. For example, as shown in FIG. 1C-1, housing 122 may be shaped to have three energy storage modules 120 uniformly distributed in an interior space defined by housing 122. In some non-limiting embodiments, there may be any number of energy storage modules 120, as described herein. For example, housing 122 may contain six energy storage modules 120, nine energy storage modules 120, twelve energy storage modules 120, and/or the like.

In some non-limiting embodiments, bar connections 124 may connect energy storage modules 120 within housing 122. For example, as shown in FIG. 1C-1, a first (e.g., left) bar connection 124 may connect second electrical connection S2 of a first (e.g., left) energy storage module 120 to first electrical connection S1 of a second (e.g., center) energy storage module 120, and a second (e.g., right) bar connection 124 may connect second electrical connection S2 of the second (e.g., center) energy storage module 120 to first electrical connection S1 of a third (e.g., right) energy storage module 120. As such, these energy storage modules 120 may be connected in series. In some non-limiting embodiments, energy storage modules 120 and/or bar connections 124 may be in other arrangements and/or have other connections (e.g., to connect energy storage modules 120 in series, in parallel, a combination of series and parallel connections, and/or the like, as described herein). In some non-limiting embodiments, bar connections 124 may include a conductive (e.g., electrically conductive) material, such as metal and/or the like.

In some non-limiting embodiments, electrical connections 126 may include a conductive (e.g., electrically conductive) material, such as metal and/or the like. For example, electrical connections 126 may include a wire, a cable, and/or the like. In some non-limiting embodiments, electrical connections 126 may allow for electrical connection between energy storage module container 130 (e.g., energy storage modules 120 within energy storage module container 130) and external components (e.g., other components of the power supply system external to housing 122).

In some non-limiting embodiments, first electrical connection 126-1 may be connected to first electrical connection S1 of at least one energy storage module 120. For example, first electrical connection 126-1 may be connected to first electrical connection S1 of a first (e.g., left) energy storage module 120 (e.g., of a group of energy storage modules 120 connected in series). In some non-limiting embodiments, second electrical connection 126-2 may be connected to second electrical connection S2 of at least one energy storage module 120. For example, second electrical connection 126-2 may be connected to second electrical connection S2 of a last (e.g., right) energy storage module 120 (e.g., of a group of energy storage modules 120 connected in series).

In some non-limiting embodiments, communication connection 128 may include at least one component that permits communication among other components. For example, communication connection 128 may include a bus connection (e.g., digital bus, such as controller area network bus (CAN bus), isolated serial port Interface (isoSPI), any derivatives thereof, any combination thereof, and/or the like). In some non-limiting embodiments, communication connection 128 may allow for communication between container energy storage modules 120 within energy storage module container 130 (e.g., module controllers 133 of such energy storage modules 120) and external components (e.g., other components of the power supply system external to housing 122, such as a system controller and/or the like). The system controller may provide a signal (e.g., command) via communication connection 128 to any of module controllers 133 for operating the switching elements 140 thereof (e.g., via one or more gate driver circuits) in a particular (e.g., controlled) manner.

Referring now to FIG. 1C-2, FIG. 1C-2 is a schematic diagram of a non-limiting embodiment of energy storage module 120. As shown in FIG. 1C-2, energy storage module 120 may include housing 131, at least one energy storage component 132, module controller 133, connectors 134, top cover 135, and bottom cover 136. The number and arrangement of components shown are provided as an example. In some non-limiting embodiments, energy storage module 120 may include additional components, fewer components, different components, or differently arranged components than those shown. Additionally or alternatively, a set of components (e.g., one or more components) of energy storage module 120 may perform one or more functions described as being performed by another set of components of energy storage module 120.

In some non-limiting embodiments, housing 131 may include plastic, metal, any combination thereof, and/or the like. For example, housing 131 may include a plastic housing. In some non-limiting embodiments, housing 131 may be configured to hold at least one (e.g., a plurality of) energy storage components 132. For example, as shown in FIG. 1C-2, housing 131 may be shaped to have six energy storage components 132 uniformly distributed in an interior space defined by housing 131.

In some non-limiting embodiments, each energy storage component 132 may include at least one of a battery, a rechargeable battery (e.g., a lithium-ion battery), a cell (e.g., battery cell, an electrochemical cell, and/or the like), a rechargeable cell, a capacitor, an ultra-capacitor, any combination thereof, and/or the like. For example, as shown in FIG. 1C-2, each energy storage component 132 may include a cylindrical cell (e.g., lithium-ion battery cell).

In some non-limiting embodiments, module controller 133 may include a controller and associated circuitry. Optionally, module controller 133 may include a microcontroller, a computing device, a processor, a microprocessor, a digital signal processor (DSP), and/or any processing component (e.g., a field-programmable gate array (FPGA), an application-specific integrated circuit (ASIC), etc.) that can be configured to perform at least one function.

In some non-limiting embodiments, connectors 134 may connect the terminals (e.g., ends) of each energy storage component 132 to module controller 133. Additionally or alternatively, at least one connector 134 may connect at least one terminal (e.g., end) of one energy storage component 132 to another terminal of another energy storage component 132. For example, connectors 134 may include a conductive (e.g., electrically conductive) material, such as metal and/or the like. In some non-limiting embodiments, some or all of the connectors 134 may be used for energy storage component 132 (e.g., cell) voltage measurements.

In some non-limiting embodiments, each of top cover 135 and bottom cover 136 may include plastic, metal, any combination thereof, and/or the like. For example, each of top cover 135 and bottom cover 136 may include a plastic cover. In some non-limiting embodiments, top cover 135 and bottom cover 136 may be configured to (e.g., sized and shaped to) cover openings at top and bottom ends, respectively, of housing 131. In some non-limiting embodiments, top cover 135 may include a first electrical connection (e.g., S1, as described herein), a second electrical connection (e.g., S2, as described herein), and/or at least one communication connection, as described herein. For example, these connections may allow for electrical and/or communicative connection between module controller 133 and external components (e.g., other components of the power supply system external to the energy storage module housing).

In some non-limiting embodiments, energy storage module 120 may include a battery module. For example, the battery module may include at least one cell (e.g., a battery cell, such as a rechargeable battery cell). For the purpose of illustration, as shown in FIG. 1C-2, the battery module may include six cells (e.g., rechargeable battery cells, such as lithium-ion cells, supercapacitors, and/or the like). In some non-limiting embodiments, energy storage components 132 (e.g., battery cells) of energy storage module 120 may be connected in series. In some non-limiting embodiments, energy storage components 132 (e.g., battery cells) of energy storage module 120 may be connected in parallel.

In some non-limiting embodiments, at least some (e.g., a subset of) energy storage components 132 may be connected in series, for example, so that the combined (e.g., summed and/or the like) voltage of the series-connected components satisfies (e.g., equals, exceeds, and/or the like) the target (e.g., desired) operating voltage of energy storage module 120. In some non-limiting embodiments, at least some (e.g., a subset of) energy storage components 132 may be connected in parallel, for example, so that the combined (e.g., summed and/or the like) capacity (e.g., current) of the parallel-connected components satisfies (e.g., equals, exceeds, and/or the like) the target (e.g., desired) a target capacity (e.g., operating current of energy storage module 120). For example, energy storage module 120 may include a plurality of subsets of energy storage components 132 such that energy storage components 132 of each subset are connected in series (e.g., to combine to output the desired module voltage), and the subsets may be connected in parallel (e.g., to combine to output the desired module current).

In some non-limiting embodiments, energy storage module 120 may be the same as or similar to or include at least some components that are the same as or similar to the battery modules described in at least one of U.S. Patent Application Pub. No. 2022/0037891, U.S. Patent Application Pub. No. 2022/0247030, U.S. Patent Application Pub. No. 2022/0359918, U.S. Patent Application Pub. No. 2022/0360094, and/or U.S. Patent Provisional Patent Application Serial No. 63/556,996, the disclosures of each of which are hereby incorporated by reference in their entireties.

Referring now to FIG. 1C-3, FIG. 1C-3 is a diagram of a non-limiting embodiment of energy storage module 120. In some non-limiting embodiments, as shown in FIG. 1C-3, energy storage module 120 may include energy storage components 132, at least one switching element (e.g., first switching element 140-1, second switching element 140-2, third switching element 140-3, and/or fourth switching element 140-4, collectively referred to as "switching elements 140," and individually referred to as "switching element 140"), first electrical connection S1, and second electrical connection S2. In some non-limiting embodiments, switching elements 140 may be part of (e.g., integrated on, connected to, and/or the like) module controller 133. In some non-limiting embodiments, first electrical connection S1 and/or second electrical connection S2 may be part of (e.g., integrated on, connected to, and/or the like) module controller 133 and/or may extend through top cover 105. The number and arrangement of components shown are provided as an example. In some non-limiting embodiments, energy storage module 120 may include additional components, fewer components, different components, or differently arranged components than those shown. Additionally or alternatively, a set of components (e.g., one or more components) of energy storage module 120 may perform one or more functions described as being performed by another set of components of energy storage module 120.

As shown in the example in FIG. 1C-2, energy storage module 120 may include six energy storage components 132 (e.g., rechargeable battery cells and/or the like) connected in series. In some non-limiting embodiments, energy storage components 132 may be in other arrangements and/or have other connections, as described herein.

In some non-limiting embodiments, switching elements 140 may be switched (e.g., opened, closed, activated, deactivated, and/or the like) to selectively connect energy storage component(s) 122 to first electrical connection S1 and/or second electrical connection S2, e.g., to control a module voltage across first electrical connection S1 and second electrical connection S2. For example, switching elements 140 may be switched so that (1) first electrical connection S1 and second electrical connection S2 are both connected to negative side (e.g., DC minus) of energy storage component(s) 122, (2) first electrical connection S1 is connected to the negative side (e.g., DC minus) of energy storage component(s) 122 and second electrical connection S2 is connected to the positive side (e.g., DC plus) of energy storage component(s) 122, or (3) first electrical connection S1 is connected to the positive side (e.g., DC plus) of energy storage component(s) 122 and second electrical connection S2 is connected to the negative side (e.g., DC minus) of energy storage component(s) 122. As such, the voltage across first electrical connection S1 and second electrical connection S2 may be zero, negative, or positive, respectively.

For the purpose of illustration by way for a few examples, to connect both first electrical connection S1 and second electrical connection S2 to the negative side (e.g., DC minus) of energy storage component(s) 122, fourth switching element 140-4 and third switching element may both be activated (e.g., closed, set to act as a closed switch, and/or the like), while second switching element 140-2 and first switching element 140-1 are deactivated (e.g., open, set to act as an open switch, and/or the like). To connect first electrical connection S1 to the negative side (e.g., DC minus) and connect second electrical connection S2 to the positive side (e.g., DC plus) of energy storage component(s) 122, fourth switching element 140-4 and second switching element 140-2 may be activated, while third switching element 140-3 and first switching element 140-1 are deactivated. To connect first electrical connection S1 to the positive side (e.g., DC plus) and second electrical connection S2 to the negative side (e.g., DC minus) of energy storage component(s) 122, first switching element 140-1 and third switching element 140-3 may be activated, and fourth switching element 140-4 and second switching element 140-2 may be deactivated. In some non-limiting embodiments, the switching elements 140 may be operated to be in states such as: a high-impedance (Hi-Z) state (e.g., in which all of the switching elements 140 are deactivated), a bypass state (e.g., in which the low-side switching elements 140-3 and 110-4 are activated while the high-side switching elements 140-1 and 140-2 are deactivated), and two polarity states (e.g., in which the energy storage component(s) 122 are connected between the first electrical connection S1 and the second electrical connection S2 in opposite polarity manner).

In some non-limiting embodiments, each switching element 140 may include at least one of a transistor (e.g., bipolar transistor, field-effect transistor (FET), metal-oxide-semiconductor field-effect transistor (MOSFET), and/or the like), a switch, a contactor, any combination thereof, and/or the like. In some non-limiting embodiments, the energy storage module 120 may include one or more driver circuits, such as a gate driver circuit, for driving each switching element 140. For example, the driver circuits may be part of (e.g., integrated on, connected to, and/or the like) module controller 133.

In some non-limiting embodiments, each switching element 140 may be driven, or controlled, via the module controller 133. For example, module controller 133 may control the switching elements 140 to selectively connect energy storage component(s) 122 to first electrical connection S1 and/or second electrical connection S2, as described herein. For example, module controller 133 may be connected to each switching element 140 in order to drive, or optionally control, such switching element 140. In some non-limiting embodiments, the module controller 133 provides signals to the gate driver circuit for driving the switching elements 140.

Referring now to FIG. 1C-4, FIG. 1C-4 is a diagram of a non-limiting embodiment of power module 112. In some non-limiting embodiments, the power module 112 may include at least one energy storage module 120. A configuration with six energy storage modules 120 is shown in FIG. 1C-4. However, other configurations are also available, including a configuration in which 24 energy storage modules 120 are connected together. Power module 112 may include selection switch 121 that may be operated, e.g., under the control of unit controller 102, for selectively connecting the plurality of energy storage modules 120 in series or a parallel and outputting power to output connection 112B (e.g., output connections 112B-1 and 112B-2). In an example, voltage selection switch 121 may be set or switched to a closed state whereupon the energy storage modules 120-1 on the left are connected in parallel with the energy storage modules 120-2 on the right, whereupon the energy storage modules 120 are connected to provide an output voltage, e.g., between 100 volts and 127 volts to a first output connection 112B-1. In another example, voltage selection switch 121 may be set or switched to an open state whereupon the energy storage modules 120-1 on the left are connected in series with the energy storage modules 120-2 on the right, whereupon the plurality of energy storage modules 120 are connected to provide an output voltage, e.g., between 220 volts and 240 volts to an external load, such as a load connected to output connection 112B-2. U1 may indicate the voltage across first set 120-1 of energy storage modules 120 and U2 may indicate the voltage across the second set 120-2 of energy storage modules 120. For brevity and clarity, only one output 112B-2 is shown in FIG. 1C-4 since selection switch 121 is in the open state thereby preventing a parallel connection between the first set 120-1 and second set 120-2 of energy storage modules 120.

In some non-limiting embodiments or aspects, a choke 155 may be connected to first set of energy storage modules 120-1 and second set of energy storage modules 120-2. For example, choke 155 may be connected to first electrical connection S1 of one energy storage module 120 of the first set and to first electrical connection S1 of one energy storage module 120 of the second set.

In some non-limiting embodiments or aspects, choke 155 may include a first winding (e.g., a first inductor), a second winding (e.g., a second inductor), and a core (e.g., a toroidal core). In some non-limiting embodiments or aspects, the first winding of choke 155 may be connected to first set (e.g., the left hand side) of energy storage modules 120. Additionally or alternatively, the second winding of choke 155 may be connected to second set (e.g., the right hand side) of energy storage modules 120. In some non-limiting embodiments or aspects, choke 155 may be in the form of a center-tapped inductor. For example, choke 155 may include a connection such that the choke is between first set and second set of energy storage modules 120 when first set and second set are in series.

Choke 155 may be configured such that there is reduced (e.g., little or no) inductive impedance to load currents through the first and second sets of energy storage modules 120, and thus no, or significantly reduced, impedance to the combined load current (e.g., the total load current). For example, a first magnetic flux of the first winding caused by a first load current through a first set of energy storage modules 120 may combine subtractively with a second magnetic flux of the second winding caused by a second load current through a second set of energy storage modules 120. It shall be appreciated that the total load current in this case may be a combination (e.g., sum) of the first load current and the second load current.

Additionally, choke 155 may impede a loop (e.g., circular) current which may sometimes flow between the first and second sets of energy storage modules 120. Such a loop current may arise, e.g., from a mismatch between the first and second sets of energy storage modules 120. For example, due to a mismatch between the energy storage modules 120 of the two sets, a loop current may tend to flow between the first set and the second set, and the direction of the flow of the loop current may depend upon the relative mismatch between the first and second sets. In other words, it may happen that one of the two sets of energy storage modules 120 is generating slightly higher voltage than the other and/or slightly higher current than the other. In such cases, a loop current (e.g., proportional to this voltage difference and/or current different) may tend to flow from the set producing a higher voltage and/or current towards the other set producing a lower voltage and/or current. The choke 155 may impede such loop current by reacting to the difference in current (e.g., caused by a difference of voltages) between the first set and the second set. Thus, the combined load current can flow essentially inductively unimpeded through the choke 155, while the loop current is inductively impeded.

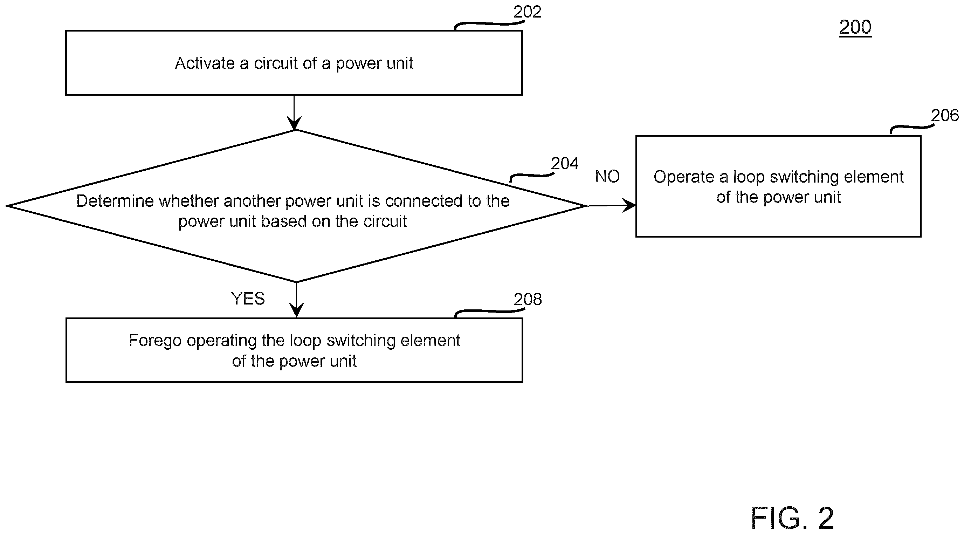

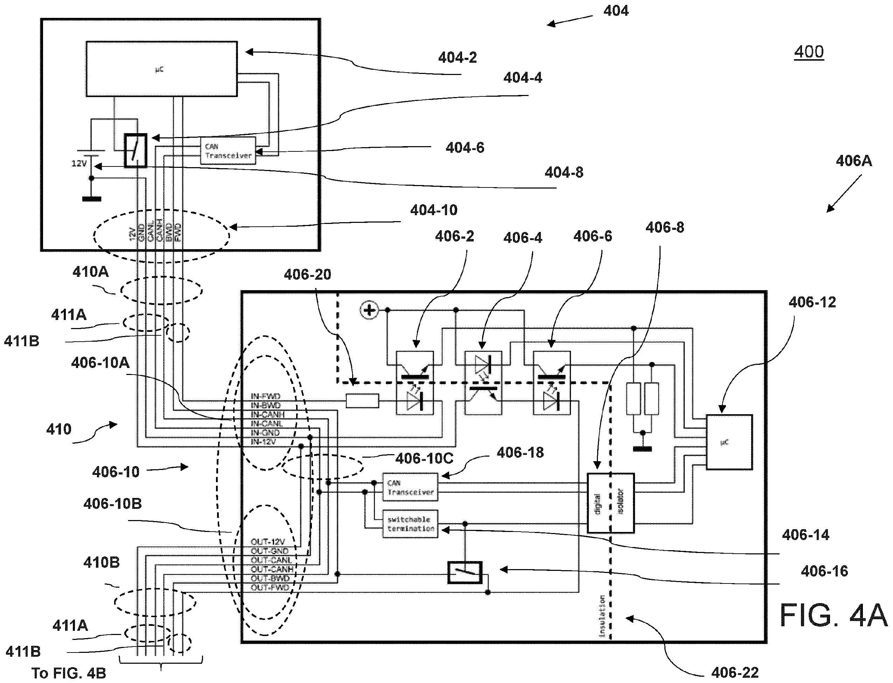

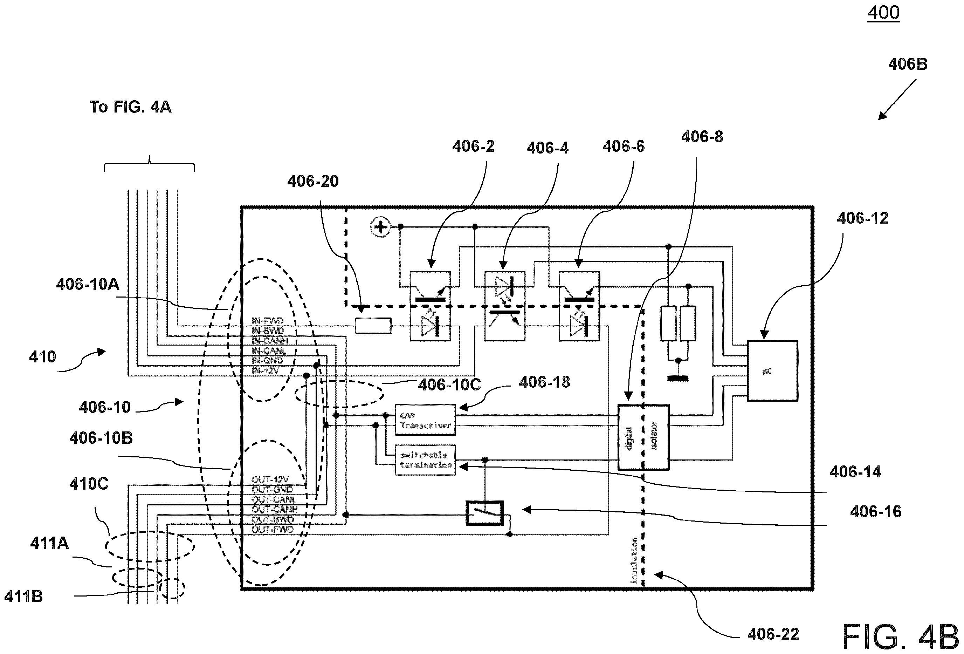

Referring now to FIG. 2, FIG. 2 is a flowchart of non-limiting embodiments of process 200 for scheduling (e.g., a scheduling scheme for scheduling one or more power units) one or more power units of an electrical system, such as the electrical system 100 of FIG. 1A or the electrical system 400 of FIGS. 4A-4B. In some non-limiting embodiments, one or more of the steps of process 200 may be performed (e.g., completely, partially, etc.) by unit controller 102. In some non-limiting embodiments, one or more of the steps of process 200 may be performed (e.g., completely, partially, etc.) by another device or a group of devices separate from or including unit controller 102, such as cluster controller 104 (e.g., a system controller of cluster controller 104) and/or other components of power unit 106. In some non-limiting embodiments, one or more of the steps of process 200 may be performed by a device or system that is external to electrical system 100 (e.g., a remote computing device).

As shown in FIG. 2, at step 202, process 200 includes activating a circuit of a power unit. For example, unit controller 102 may activate a first circuit (e.g., a driver circuit), such as a first switching element (a driver switching element), of power unit 106. In some non-limiting embodiments, unit controller 102 may activate the first circuit by providing a control signal to the first circuit. In some non-limiting embodiments, the first circuit may include an optocoupler. In some non-limiting embodiments, unit controller 102 may activate the first circuit of power unit 106 for a time interval (e.g., a predetermined time interval of a scheduling scheme, a predetermined time interval of a range of 10 ms to 1 second, such as 10 ms, 100ms, 500 ms, etc., a predetermined time interval of a range of 1 second to 15 seconds, such as 3 seconds, 5 seconds, 10 seconds, etc.).

In some non-limiting embodiments, unit controller 102 may receive a first electrical signal (e.g., a first signal, an initial signal, etc.) on a first electrical signal path (e.g., a first signal line of a first bus) from cluster controller 104. In some non-limiting embodiments, the first electrical signal may include a power signal and/or the first electrical signal path may include a power supply line of a bus (e.g., a serial bus, such as a CAN bus) that connects unit controller 102 and cluster controller 104. In some non-limiting embodiments, unit controller 102 may activate the first circuit of power unit 106 based on receiving the first electrical signal on the first electrical signal path from cluster controller 104. In some non-limiting embodiments, unit controller 102 may activate the first circuit based on receiving a signal from a receiver circuit (e.g., a switching element of power unit 106 configured to receive the first electrical signal from cluster controller 104 and provide a signal as an output based on receiving the first electrical signal). In some non-limiting embodiments, unit controller 102 may activate the first circuit based on receiving data associated with the first electrical signal provided on the first electrical signal path of the bus that connects cluster controller 104 and power unit 106.

In some non-limiting embodiments, unit controller 102 may receive the first electrical signal on the first electrical signal path from cluster controller 104 based on an action of cluster controller 104. For example, cluster controller 104 may activate a power supply line (e.g., a low voltage power supply line, a 12V power supply line, etc.) of the bus that connects cluster controller 104 to power unit 106. In some non-limiting embodiments, unit controller 102 may activate the first circuit of power unit 106 based on (e.g., after) cluster controller 104 activating the power supply line of the bus.

As shown in FIG. 2, at step 204, process 200 includes determining whether another power unit is connected to the power unit based on the circuit. For example, unit controller 102 may determine whether another power unit 106 is connected to power unit 106 based on the first circuit. In some non-limiting embodiments, unit controller 102 may determine whether another power unit 106 is connected to power unit 106 based on a second circuit (e.g., a detector circuit, a sensor, etc.), such as a second switching element (e.g., a detector switching element), of power unit 106 that is connected to the first circuit. In some non-limiting embodiments, the first circuit may provide an electrical current to the second circuit which causes the second circuit to provide an output (e.g., an output that is indicative of current flowing in the second circuit). In some non-limiting embodiments, the second circuit may become energized when another power unit is connected to the output port of power unit 106, such as when the output port of power unit 106-1 is connected to the input port of power unit 106-2.

In some non-limiting embodiments, unit controller 102 may determine whether another power unit is connected to power unit 106 at an output port of power unit 106 based on an output of the second circuit of power unit 106. For example, unit controller 102 may determine whether another power unit is connected to power unit 106 at an output port of power unit 106 based on an evaluation of an output of the second circuit of power unit 106. In such an example, unit controller 102 may evaluate the output of the second circuit to determine whether the output is indicative of another power unit being connected to power unit 106.

In some non-limiting embodiments, unit controller 102 may determine that another power unit is connected to power unit 106 at the output port of power unit 106 based on a first output of the second circuit of power unit 106, where the first output of the second circuit may be indicative of electrical current flowing through the second circuit. Additionally or alternatively, unit controller 102 may determine that another power unit is not connected to power unit 106 at the output port of power unit 106 based on a second output of the second circuit of power unit 106, where the second output of the second circuit may be indicative of electrical current not flowing through the second circuit (e.g., the second output may be indicative of the second circuit not being energized). Additionally or alternatively, unit controller 102 may determine that another power unit is not connected to power unit 106 at the output port of power unit 106 based on the second circuit of power unit 106 failing to provide an output (e.g., an LED of the second circuit of power unit 106 does not illuminate).

In some non-limiting embodiments, unit controller 102 may determine whether to operate a loop switching element (e.g., a switching element that connects a bus signal line of an output port of power unit 106 to a bus signal line of an input port of power unit 106 to create an electrical signal path) of power unit 106 based on determining whether another power unit 106 is connected. In some non-limiting embodiments, the loop switching element has a first state and a second state. In some non-limiting embodiments, when in the first state, the loop switching element is closed to provide a second electrical signal path (e.g., an electrical signal path that is different from an electrical signal path on which an electrical signal was received upon which activation of the circuit was based on) between power unit 106 and cluster controller 104 to cause a second electrical signal to flow from power unit 106 to cluster controller 104. In some non-limiting embodiments, when in the second state, the loop switching element is open to prevent the second electrical signal from flowing in the second electrical signal path from the at least one power unit to the system controller.

In some non-limiting embodiments, unit controller 102 may determine to operate the loop switching element of power unit 106 so that the loop switching element is in the first state to provide the second electrical signal path between power unit 106 and cluster controller 104 (e.g., a system controller of cluster controller 104) and to cause the second electrical signal to flow from power unit 106 to cluster controller 104 (e.g., a system controller of cluster controller 104) based on determining that another power unit is not connected at the output port of power unit 106. In some non-limiting embodiments, unit controller 102 may determine not to operate the loop switching element of power unit 106 so that loop switching element is in in the second state to prevent the second electrical signal from flowing from power unit 106 to cluster controller 104 based on determining that another power unit is connected at the output port of the at least one power unit.

As shown in FIG. 2, at step 206 (NO), process 200 includes operating a loop switching element of the power unit. For example, unit controller 102 may operate a second switching element of power unit 106 (e.g., power unit 106-1) based on determining that another power unit (e.g., power unit 106-2) is not connected to power unit 106. In some non-limiting embodiments, unit controller 102 may operate the loop switching element of power unit 106 so that the loop switching element is in the first state to provide the second electrical signal path between power unit 106 and cluster controller 104 and to cause the second electrical signal to flow from power unit 106 to cluster controller 104 based on determining that another power unit is not connected at the output port of power unit 106. In some non-limiting embodiments, unit controller 102 may operate a loop switching element of power unit 106 based on determining to operate the loop switching element.

As shown in FIG. 2, at step 208 (YES), process 200 includes foregoing operating the loop switching element of the power unit. For example, unit controller 102 may forego operating the loop switching element of power unit 106 based on determining that another power unit (e.g., power unit 106) is connected to power unit 106. In some non-limiting embodiments, unit controller 102 may forego operating the loop switching element of power unit 106 so that the loop switching element is in in the second state to prevent the second electrical signal from flowing from power unit 106 to cluster controller 104 based on determining that another power unit is connected at the output port of power unit 106. In some non-limiting embodiments, unit controller 102 may forego operating the loop switching element of power unit 106 based on determining to operate the loop switching element.

In some non-limiting embodiments, cluster controller 104 (e.g., a system controller of cluster controller 104) may receive a signal that is indicative of completion of a scheduling scheme for one or more power units 106. In some non-limiting embodiments, cluster controller 104 may receive the second electrical signal from power unit 106 via the second electrical signal path of the bus that connects cluster controller 104 and power unit 106 (e.g., a second signal line of a second bus) and cluster controller 104 may determine that a scheduling scheme has been completed based on receiving the second electrical signal.

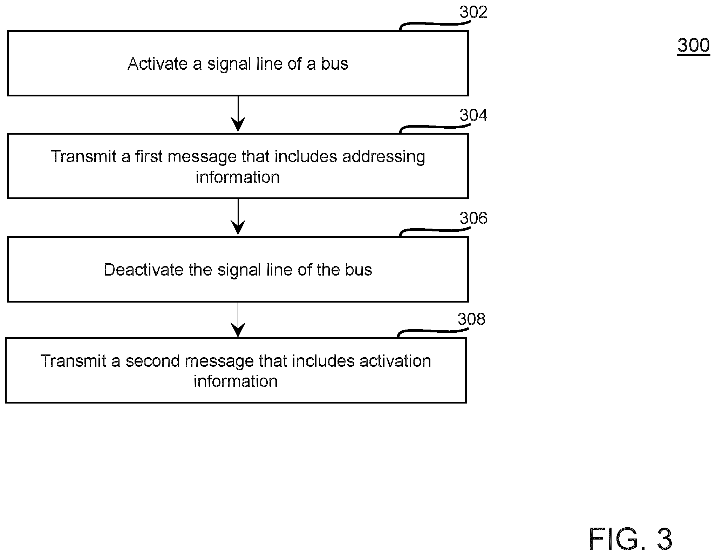

Referring now to FIG. 3, FIG. 3 is a flowchart of non-limiting embodiments of process 300 for addressing (e.g., an addressing scheme for addressing) one or more power units of an electrical system. In some non-limiting embodiments, one or more of the steps of process 300 may be performed (e.g., completely, partially, etc.) by cluster controller 104. In some non-limiting embodiments, one or more of the steps of process 300 may be performed (e.g., completely, partially, etc.) by another device or a group of devices separate from or including cluster controller 104, such as unit controller 102 and/or other components of power unit 106. In some non-limiting embodiments, one or more of the steps of process 300 may be performed by a device or system that is external to electrical system 100, such as a computing device that is remote from electrical system 100. In some non-limiting embodiments, the process 300 of FIG. 3 (e.g., addressing) may follow process 200 of FIG. 2 (e.g., scheduling).

As shown in FIG. 3, at step 302, process 300 includes activating a signal line of a bus. For example, cluster controller 104 may activate a signal line of a bus that connects cluster controller 104 and power unit 106. In some non-limiting embodiments, the bus may include a serial bus, such as a CAN bus. In some non-limiting embodiments, by activating the signal line of the bus a corresponding signal line of an input port of a data interface of power unit 106 may be energized.

As shown in FIG. 3, at step 304, process 300 includes transmitting a first message that includes addressing information. For example, cluster controller 104 may transmit a first message that includes addressing information to power unit 106. In some non-limiting embodiments, cluster controller 104 may transmit the first message according to a communication protocol of the bus. In some non-limiting embodiments, the addressing information may include information that causes power unit 106 to assign a first address to power unit 106. In some non-limiting embodiments, based on the signal line of the input port of the data interface of power unit 106 being energized, power unit 106 may assign the first address to power unit 106. In some non-limiting embodiments, unit controller 102 may store data associated with the first address in a memory of unit controller 102.

As shown in FIG. 3, at step 306, process 300 includes deactivating the signal line of the bus. For example, cluster controller 104 may deactivate the signal line of the bus that connects cluster controller 104 and power unit 106 based on transmitting the first message.

As shown in FIG. 3, at step 308, process 300 includes transmitting a second message that includes activation information. For example, cluster controller 104 may transmit a second message that includes activation information to power unit 106. In some non-limiting embodiments, cluster controller 104 may transmit the second message according to a communication protocol of the bus. In some non-limiting embodiments, the activation information may include information that causes power unit 106 to activate a bus signal line of an output port of the data interface of power unit 106. In some non-limiting embodiments, based on receiving the message that includes the first activation information, power unit 106 may activate a bus signal line of the output port of the data interface of power unit 106.

In some non-limiting embodiments, cluster controller 104 may transmit another message (e.g., according to a communication protocol of the bus) to another power unit that includes second addressing information and cluster controller 104 may assign a second address to the other power unit. Accordingly, based on an active bus signal line of an input port of a data interface of the other power unit that corresponds to the bus signal line of the output port of the data interface of power unit 106 that is activated, cluster controller 104 may assign the second address to the other power unit.

In some non-limiting embodiments, cluster controller 104 may transmit another message (e.g., according to a communication protocol of the bus) that includes second addressing information that causes another power unit to assign a second address to the other power unit. Accordingly, based on an active bus signal line of an input port of a data interface of the other power unit that corresponds to the bus signal line of the output port of the data interface of power unit 106 that is activated, the other power unit may assign the second address to the other power unit.

Referring now to FIGS. 4A-4B, FIGS. 4A-4B are an overview of an implementation of electrical system 400 that provides for operating one or more power units of electrical system 400. As shown in FIGS. 4A-4B, electrical system 400 may include cluster controller 404, and power units 406A and 406B (referred to individually as power unit 406 and collectively as power units 406, where appropriate). In some non-limiting embodiments, electrical system 400 may be the same as or similar to electrical system 100. For example, cluster controller 404 may be the same as or similar to cluster controller 104 and/or power units 406A and 406B may be the same as or similar to power unit 106. While only two power units are shown, the below description would apply to an electrical system 400 that includes additional power units connected (e.g., connected in series) as well.

As shown in FIGS. 4A-4B, cluster controller 404 is connected to power unit 406A via bus 410 (e.g., via bus section 410A of bus 410) and power unit 406A is connected to power unit 406B via bus 410 (e.g., via bus section 410B of bus 410). In some non-limiting embodiments, power unit 406B may include bus section 410C of bus 410 to connect to another power unit (not shown). In some non-limiting embodiments, additionally power units may be connected via a bus in the same or similar fashion based on desired characteristics of power (e.g., an amount of power, a voltage, an amount of current, etc.) to be supplied to a load. In some non-limiting embodiments, bus 410 may include a serial bus, such as a CAN bus.

In some non-limiting embodiments, bus 410 may include a plurality of bus signal lines and/or a plurality of power supply lines. As shown in FIGS. 4A-4B, the plurality of bus signal lines may include a forward (FWD) signal line, a backward (BWD) signal line, a CAN high (CANH) signal line, a CAN low (CANL) signal line, a ground (GND) signal line, and a 12V supply line. As shown in FIGS. 4A-4B, bus section 410A, bus section 410B, and bus section 410C of bus 410 may each include the plurality of bus signal lines.

In some non-limiting embodiments, the GND supply line and the 12V supply line may function as a low-voltage power supply of bus 410. In some non-limiting embodiments, bus signal lines may form a first bus 411A, which may be referred to as a digital communication bus, and second bus 411B, which may be referred to as an enumeration bus. In some non-limiting embodiments, each of first bus 411A and second bus 411B may each include a plurality of signal lines and/or a plurality of supply lines. As shown in FIGS. 4A-4B, first bus 411A (e.g., digital communication bus) may include at least the CANH signal line and the CANL signal line, and may also include the GND supply line and the 12V supply line. As further shown in FIGS. 4A-4B, second bus 411B (e.g., enumeration bus) may include the FWD signal line and the BWD signal line. The purpose of each line is discussed further below.

As further shown in FIGS. 4A-4B, cluster controller 404 may include cluster controller module 404-2 (e.g., a microcontroller for controlling cluster controller 404 and acting as a system controller), controller switching element 404-4, CAN transceiver 404-6, power source 404-8, and data interface 404-10. In some non-limiting embodiments, cluster controller module 404-2 may include a processor (e.g., a processor core), an integrated circuit, and/or the like. In some non-limiting embodiments, controller switching element 404-4 may include a switching element, such as an electrical switch, a transistor, and/or the like. In some non-limiting embodiments, CAN transceiver 404-6 may include a transceiver for transmitting and/or receiving information (e.g., messages formatted according to a CAN bus protocol) on a CAN bus. As further shown in FIGS. 4A-4B, CAN transceiver 404-6 may be connected to cluster controller module 404-2 and a plurality of bus signal lines. For example, CAN transceiver 404-6 can be connected at a first side to cluster controller module 404-2 and may be connected at a second side to a CANH signal line and a CANL signal line of data interface 404-10.

In some non-limiting embodiments, power source 404-8 may include a power source that operates at a predetermined voltage (e.g., that provides an output at a predetermined voltage). For example, power source 404-8 may include a 12V battery.

In some non-limiting embodiments, data interface 404-10 of cluster controller 404 may be the same as or similar to data interface 110. In some non-limiting embodiments, data interface 404-10 may include a port (e.g., a port configured as an output port) that includes a plurality of bus signal lines. In some non-limiting embodiments, the plurality of bus signal lines may correspond to bus signal lines of a CAN bus. As shown in FIGS. 4A-4B, the plurality of bus signal lines may include the FWD, BWD, CANH, CANL, GND supply line, and 12V supply line discussed above. In some non-limiting embodiments, cluster controller module 404-2 may provide power to one or more power units from power source 404-8. For example, cluster controller module 404-2 may operate controller switching element 404-4 so that power source 404-8 provides power on the 12V supply line to all power units 406 that are connected to system controller 404-2 via bus 410.

As further shown in FIGS. 4A-4B, power unit 406 (e.g., power unit 406A or power unit 406B) may include unit switching elements 406-2, 406-4, and 406-6, data interface 406-10, digital isolator 406-8, unit controller 406-12 (e.g., module microcontroller), switchable termination 406-14, loop switching element 406-16, and CAN transceiver 406-18. In some non-limiting embodiments, power unit 406 may receive power to operate (e.g., activate, deactivate, power on components, etc.) from cluster controller module 404-2 via bus 410. For example, power unit 406 may receive power to operate from cluster controller module 404-2 via the 12V supply line of bus 410.

In some non-limiting embodiments, data interface 406-10 may be the same as or similar to data interface 110. As further shown in FIGS. 4A-4B, data interface 406-10 may include input port 406-10A and output port 406-10B. In some non-limiting embodiments, input port 406-10A and output port 406-10B may include a plurality of bus signal lines. In some non-limiting embodiments, the plurality of bus signal lines may correspond to bus signal lines of a CAN bus. As shown in FIGS. 4A-4B, the plurality of bus signal lines of input port 406-10A may include an IN-FWD signal line, an IN-BWD signal line, an IN-CANH signal line, an IN-CANL signal line, an IN-GND supply line, and an IN-12V supply line, and output port 406-10B may include an OUT-FWD signal line, an OUT-BWD signal line, an OUT-CANH signal line, an OUT-CANL signal line, an OUT-GND supply line, and an OUT-12V supply line.

In some non-limiting embodiments, a unit bus section 406-10C may be between input port 406-10A and output port 406-10B. In some non-limiting embodiments, unit bus section 406-10C may be connected to unit controller 406-12. For example, unit bus section 406-10C may be connected to unit controller 406-12 via CAN transceiver 406-18.

In some non-limiting embodiments, each of unit switching elements 406-2, 406-4, and 406-6 may include a switching element, such as an electrical switch, a transistor, and/or the like. In one example, each of unit switching elements 406-2, 406-4, and 406-6 may include an optocoupler with an LED. As further shown in FIGS. 4A-4B, unit switching element 406-2 may be connected at a first side to a first bus signal line (e.g., "IN-FWD") of input port 406-10A of data interface 406-10 via resistor 406-20 and may be connected at a second side to a second bus signal line (e.g., "IN-GND") of input port 406-10A of data interface 406-10. As further shown in FIGS. 4A-4B, unit switching element 406-4 may be connected at a first side to a first bus signal line (e.g., "IN-12V") of input port 406-10A of data interface 406-10 and may be connected at a second side to unit switching element 406-6, such that a collector emitter (CE) path of unit switching element 406-4 is connected to unit switching element 406-6. As further shown in FIGS. 4A-4B, unit switching element 406-6 may be connected at a first side to unit switching element 406-4 and may be connected at a second side to a bus signal line of output port 406-10B of data interface 406-10.

Additionally, at output port 406-10B of power unit 406A, the OUT-FWD signal line may be connected to the IN-12V supply line (e.g., positive or high side of the low-voltage power supply of bus 410) via a transistor of an optocoupler of unit switching element 406-4 and an LED of an optocoupler of unit switching element 406-6. Further, the LED of the optocoupler of unit switching element 406-6 is connected in series to the transistor CE path of the optocoupler of unit switching element 406-4 and the LED of the optocoupler of unit switching element 406-6 may be energized when input port 406-10A of data interface 406-10 of power unit 406B is connected to output port 406-10B of data interface 406-10 of power unit 406A and the LED of the optocoupler of unit switching element 406-6 is activated. Additionally or alternatively, the LED of the optocoupler of unit switching element 406-2 of power unit 406A may be activated.

As further shown as non-limiting examples in FIGS. 4A-4B, each of unit switching elements 406-2, 406-4, and 406-6 may be connected to unit controller 406-12. In some non-limiting embodiments, unit controller 406-12 may provide signals to one or more of unit switching elements 406-2, 406-4, and 406-6 to cause one or more of unit switching elements 406-2, 406-4, and 406-6 to operate.

In some non-limiting embodiments, power unit 406 may include an enumeration detector, which may include one or more devices (e.g., one or more circuits, one or more circuit components, one or more processors, one or more controllers, etc.) configured to allow for detection of a downstream power unit (e.g., power unit 406B) connected at an output port (e.g., output port 406-10B) of a power unit (e.g., power unit 406A) according to a scheduling scheme as disclosed herein.

In some non-limiting embodiments, the enumeration detector may include or be formed from one or more switching elements of unit switching elements 406-2, 406-4, and 406-6. In some non-limiting embodiments, the enumeration detector may include a receiver circuit. In some non-limiting embodiments, the receiver circuit may include one or more devices (e.g., one or more circuits, one or more circuit components, one or more processors, one or more controllers, etc.) configured to receive a first electrical signal provided on a first electrical signal path of bus 410 (e.g., a first bus signal line of second bus 411B). In some non-limiting embodiments, the receiver circuit may be configured to provide (e.g., transmit) data associated with the first electrical signal based on the receiver circuit receiving the first electrical signal on the first electrical signal path. In some non-limiting embodiments, the data associated with the first electrical signal may be an output of the receiver circuit that is provided when the receiver circuit is energized. In some non-limiting embodiments, the receiver circuit may include unit switching element 406-2 connected to input port 406-10A.

In some non-limiting embodiments, cluster controller module 404-2 may activate a bus signal line and/or a power supply line of bus 410 and provide an initial signal on a first bus signal line of bus 410 (e.g., a signal line of second bus 411B, referred to above as the enumeration bus) to the receiver circuit to cause the receiver circuit (e.g., unit switching element 406-2) to provide a signal to unit controller 406-12. In some non-limiting embodiments, the initial signal may be provided on the FWD signal line of second bus 411B. In this way, cluster controller module 404-2 may initiate a scheduling scheme for one or more power units 406 by indicating to the power unit 406A that cluster controller 404 is connected upstream of power unit 406A.

In some non-limiting embodiments, cluster controller module 404-2 may receive a second signal on a second bus signal line of bus 410 (e.g., a signal line of second bus 411B, such as the BWD line) and determine that a scheduling scheme has been completed based on receiving the second signal, as will be described below.

In some non-limiting embodiments, the enumeration detector may include a sender circuit. In some non-limiting embodiments, the sender circuit may include one or more devices (e.g., one or more circuits, one or more circuit components, one or more processors, one or more controllers, etc.) configured to be connected to input port 406-10A (e.g., connected to unit bus section 406-10C that is connected to input port 406-10A) and to be used to determine if a power unit (e.g., power unit 406B) is connected to output port 406-10B of power unit 406A. In some non-limiting embodiments, the sender circuit may be activated (e.g., energized based on receiving a control signal from unit controller 406-12) to detect whether electrical current may flow from input port 406-10A, through the sender circuit, and to output port 406-10B based on a power unit 406B being connected to output port 406-10B. If the sender circuit detects electrical current flowing from input port 406-10A, through the sender circuit, and to output port 406-10B (e.g., based on a power unit being connected to output port 406-10B), this is indicative of a power unit (e.g., power unit 406B) being connected to output port 406-10B. If the sender circuit does not detect electrical current flowing from input port 406-10A, through the sender circuit, and to output port 406-10B, this is indicative of a power unit not being connected to output port 406-10B.

In some non-limiting embodiments, the sender circuit may include unit switching element 406-4 connected at input port 406-10A and/or unit switching element 406-6 connected to unit switching element 406-4. In this way, unit switching element 406-4 (e.g., a driver switching element) may function as a driver circuit and unit switching element 406-6 (e.g., detector element) may function as a detector circuit, where the driver circuit drives (e.g., provides an electrical current to) the detector circuit.

Unit switching element 406-4 may be activated by unit controller 406-12 upon receiving a signal from receiver circuit (e.g., switching element 406-2) indicating that an upstream connection with cluster controller 404 exists. Activation of unit switching element 406-4 can allow electrical current (e.g., from signal line IN-12V) to flow to unit switching element 406-6. Whether electrical current then flows through unit switching element 406-6 may depend on whether an electrical connection (and electrical current path) exists with power unit 406B along, e.g., OUT-FWD line of bus section 410B and a corresponding receiver circuit (e.g., switching circuit 406-2) of power unit 406B, as shown in FIGS. 4A-4B. In this way, enumeration detector (e.g., the receiver circuit and sender circuit) can detect a connection between power unit 406A and a second power unit 406B.

In some non-limiting embodiments, loop switching element 406-16 may be operated based on whether the enumeration detector detects that a second power unit 406B is connected to power unit 406A. For example, the loop switching element 406-16 may be operated so that loop switching element 406-16 is closed to provide a second electrical signal path of bus 410 (e.g., a second bus signal line of second bus 411B) between power unit 406A and cluster controller module 404-2, which causes a second electrical signal to flow from the power unit 406A to the cluster controller module 404-2 on the second electrical signal path. The second electrical signal may be indicative of a second power unit not being connected to power unit 406A and may act as a termination to alert cluster controller module 404-2 that no further power units are connected.

In some non-limiting embodiments, input port 406-10A may be connected to data interface 404-10 via first bus 411A and second bus 411B, such that unit bus section 406-10C may be connected to first bus 411A (e.g., digital communication bus) and the receiver circuit (e.g., unit switching element 406-2) is connected to second bus 411B (e.g., enumeration bus). In this way, a communication connection is provided between cluster controller module 404-2 and power unit 406A, where the communication connection causes the receiver circuit to provide a signal (e.g., upon receiving an initial signal from cluster controller module 404-2) to unit controller 406-12, where the signal is indicative of cluster controller module 404-2 being connected upstream of power unit 406A. This signal, in turn, enables an electrical connection at output port 406-10B which is usable by a second power unit 406B for detecting a connection to power unit 406A.

In some non-limiting embodiments, digital isolator 406-8 may include a device (e.g., an integrated circuit) that isolates signals (e.g., digital signals) and/or transfers communication across isolation barrier 406-22. As further shown in FIGS. 4A-4B, digital isolator 406-8 may be connected at a first side to unit controller 406-12 and may be connected at a second side to switchable termination 406-14, loop switching element 406-16, and CAN transceiver 406-18. In this way, isolation barrier 406-22 that is provided based on one or more optocouplers of unit switching elements 406-2, 406-4, and 406-6 and/or digital isolator 406-8, may provide protection from dangerous situations that could result in damage to data interface 410 or other components in contact with data interface 410 and/or individuals that may be in contact with data interface 110.

In some non-limiting embodiments, unit controller 406-12 may include one or more devices that controls operation of components of power unit 406. For example, unit controller 406-12 may include a processor (e.g., a processor core), an integrated circuit, and/or the like. In some non-limiting embodiments, unit controller 406-12 may be the same as or similar to system controller 404-2.

In some non-limiting embodiments, switchable termination 406-14 may include a device that provides a termination of one or more bus signal lines (e.g., an IN-CANH signal line and an IN-CANL signal line) and that may be switched from a termination configuration to an open configuration and vice versa. As further shown in FIGS. 4A-4B, switchable termination 406-14 may be connected at a first side to CAN transceiver 406-18 and two bus signal lines (e.g., "IN-CANH signal line" and "IN-CANL signal line") of input port 406-10A of data interface 406-10 and may be connected at a second side to loop switching element 406-16.

In some non-limiting embodiments, loop switching element 406-16 may include a switching element, such as an electrical switch, a transistor, and/or the like. As further shown in FIGS. 4A-4B, loop switching element 406-16 may be connected at a first terminal (e.g., via digital isolator 406-8) to unit controller 406-12 (e.g., between unit controller 406-12 and switchable termination 406-14), at a second terminal to a first bus signal line, such as a BWD signal line (e.g., an IN-BWD signal or an OUT-BWD signal line) of data interface 406-10, and at a third terminal to unit switching element 406-6 and a second bus signal line (e.g., an OUT-FWD signal line) of data interface 406-10 to lead towards output port 406-10B.

In some non-limiting embodiments, loop switching element 406-16 may have a first state and a second state. In the first state (e.g., loop switching element 406-16 is closed), loop switching element 406-16 may provide (e.g., establish, form, etc.) a signal path between power unit 406A and cluster controller module 404-2. For example, in the first state, loop switching element 406-16 may provide a signal path along the BWD signal line of bus 410 between power unit 406A and cluster controller module 404-2 so that a signal may flow from power unit 406A to cluster controller module 404-2 on the BWD signal line. In some non-limiting embodiments, the first state of loop switching element 406-16 may correspond to a situation in which another power unit is not connected to power unit 406A (e.g., another power unit is not connected to output port 406-10B of data interface 406-10 of power unit 406A).

In the second state (e.g., loop switching element 406-16 is open), loop switching element 406-16 may forego providing (e.g., fail to establish, prevent, etc.) a signal path between power unit 406A and cluster controller module 404-2. For example, in the second state, loop switching element 406-16 may prevent a signal path along the BWD signal line of bus 410 between power unit 406A and cluster controller module 404-2 so that a signal may be prevented from flowing from power unit 406A to cluster controller module 404-2 on the BWD signal line. In some non-limiting embodiments, the second state of loop switching element 406-16 may correspond to a situation in which another power unit is connected to power unit 406A (e.g., another power unit 406B is connected to output port 406-10B of data interface 406-10 of power unit 406A). In the second state, a signal may flow from power unit 406A on the OUT-FWD signal line to another power unit 406B (e.g., to an IN-FWD signal line of input port 406-10A of data interface 406-10) that is connected to output port 406-10B of data interface 406-10 of power unit 406A.

In some non-limiting embodiments, CAN transceiver 406-18 may include a transceiver for transmitting and/or receiving information (e.g., messages formatted according to a CAN bus protocol) on a CAN bus. As further shown in FIGS. 4A-4B, CAN transceiver 406-18 may be connected (e.g., via digital isolator 406-8) to unit controller 406-12 and a plurality of bus signal lines. For example, CAN transceiver 406-18 may be connected at a first side to unit controller 406-12 and may be connected at a second side to a CANH signal line (e.g., an IN-CANH signal line or an OUT-CANH signal line) and a CANL signal line (e.g., an IN-CANL signal line or an OUT-CANL signal line) of data interface 406-10. In some non-limiting embodiments, CAN transceiver 406-18 may be the same as or similar to CAN transceiver 404-6.

As shown in FIGS. 4A-4B, the OUT-BWD signal line of output port 406-10B of data interface 406-10 of power unit 406A corresponds to IN-BWD signal line of input port 406-10A of data interface 406-10 of power unit 406A and IN-BWD signal line of input port 406-10A may be connected to the OUT-FWD signal line of output port 406-10B via loop switching element 406-16.

As shown in FIGS. 4A-4B, each of power unit 406A and power unit 406B includes a respective switchable termination 406-14, which may be configured as a termination of a CAN bus of bus 410 (e.g., a termination of each respective portion, such as bus section 410A or bus section 410B, of a CAN bus of bus 410). Each switchable termination 406-14 may be switched on based on loop switching element 406-16 connecting the IN-BWD signal line and the OUT-FWD signal line.

Further, in the implementation shown in FIGS. 4A-4B, upon activation of power units 406A and 406B, which may be based on activation of the 12V supply line of bus 410 by cluster controller module 404-2 (e.g., activation of the 12V supply line of bus 410 by operation of controller switching element 404-4), each of power units 406A and 406B activates (e.g., activates for a time interval) a respective optocoupler of unit switching element 406-4 to determine whether a power unit is connected at a respective output port 406-10B of power units 406A and 406B by evaluating a respective output of unit switching element 406-6. If a respective unit controller 406-12 determines that the output of unit switching element 406-6 indicates that a power unit is not connected at a respective output port 406-10B, then unit controller 406-12 may activate switchable termination 406-14 and loop switching element 406-16. Upon activation of switchable termination 406-14 and loop switching element 406-16, the OUT-BWD signal line of output port 406-10B of data interface 406-10 may be connected to the BWD signal line of data interface 404-10 of cluster controller module 404-2 (e.g., upon activation of switchable termination 406-14 and loop switching element 406-16 IN-BWD, OUT-BWD, and OUT-FWD are connected together). If a respective unit controller 406-12 determines that the output of unit switching element 406-6 indicates that a power unit is connected at a respective output port 406-10B, then unit controller 406-12 may forego activating switchable termination 406-14 and/or loop switching element 406-16.

In the implementation shown in FIGS. 4A-4B, as part of a scheduling scheme, power units 406A and 406B may activate. For example, the optocoupler of unit switching element 406-6 of power unit 406A may be activated for a time interval (e.g., a predetermined time interval of a scheduling scheme, e.g., a predetermined time interval of a range of less than 1 ms to 1 second, such as 10 ms, 100 ms, 500 ms, etc.) to determine that power unit 406B is connected at output port 406-10B of power unit 406A. With this, unit controller 406-12 of power unit 406A may determine that the output of unit switching element 406-6 of power unit 406B indicates that power unit 406B is connected at output port 406-10B and unit controller 406-12 may forego activating switchable termination 406-14 and loop switching element 406-16.

In addition, the optocoupler of unit switching element 406-6 of power unit 406B may be activated for the time interval to determine that another power unit is not connected at output port 406-10B of power unit 406B. With this, unit controller 406-12 of power unit 406B may determine that the output of unit switching element 406-6 indicates that another power unit is not connected at output port 406-10B and unit controller 406-12 may activate switchable termination 406-14 and loop switching element 406-16. If no such additional power unit is connected, cluster controller module 404-2 receives a signal, such as through BWD signal line in the manner described above, that indicates the bus has been terminated. Cluster controller module 404-2 may, upon receiving this indication, proceed to the addressing scheme described below.

In the implementation shown in FIGS. 4A-4B, as part of an addressing scheme following expiration of a time interval for a scheduling scheme, cluster controller module 404-2 may activate a bus signal line, such as the FWD signal line of data interface 404-10, which may energize the IN-FWD signal line of input port 406-10A of data interface 406-10 of power unit 406A.

In some non-limiting embodiments, cluster controller module 404-2 may transmit an addressing message to unit controller 406-12. For example, cluster controller module 404-2 may activate a bus signal line of bus 410 (e.g., first bus 411A) and transmit the addressing message to unit controller 406-12 via bus 410 (e.g., first bus 411A). The addressing message may include addressing information that causes unit controller 406-12 to assign an address to power unit 406A. In some non-limiting embodiments, unit controller 406-12 may assign an address to power unit 406A (e.g., store the address in a memory) based on a signal line of input port 406-10A being energized (e.g., activated).

In some non-limiting embodiments, cluster controller module 404-2 may transmit a message according to a CAN bus protocol (e.g., a CAN message on the CANH signal line and/or the CANL signal line, a broadcast CAN message, etc.) that includes first addressing information (e.g., content that provides that a power unit that receives an active signal, such as a logical 1, at IN-FWD signal line will respond to messages directed to a first address) that causes power unit 406A to assign a first address to power unit 406A. Accordingly, based on the IN-FWD signal line of input port 406-10A of data interface 406-10 of power unit 406A being energized, power unit 406A may assign the first address to power unit 406A based on unit controller 406-12 of power unit 406A storing data associated with the first address in a memory of unit controller 406-12.

In some non-limiting embodiments, cluster controller module 404-2 may deactivate a bus signal line (e.g., the FWD signal line of data interface 404-10) of bus 410. For example, cluster controller module 404-2 may deactivate the FWD signal line of data interface 404-10 based on transmitting the message that includes first addressing information. In some non-limiting embodiments, cluster controller module 404-2 may transmit an activation message directed to the first address (e.g., to power unit 406A). For example, cluster controller module 404-2 may transmit the activation message according to a CAN bus protocol that includes first activation information that causes power unit 406A to activate a bus signal line, such as the OUT-FWD signal line, of output port 406-10B of data interface 406-10 of power unit 406A. Accordingly, power unit 406A (e.g., unit controller 406-12 of power unit 406A) may activate a bus signal line, e.g., the OUT-FWD signal line, of output port 406-10B of data interface 406-10 of power unit 406A based on receiving the message that includes the first activation information.

In some non-limiting embodiments, cluster controller module 404-2 may transmit a message according to a CAN bus protocol (e.g., a broadcast CAN message) that includes second addressing information (e.g., content that provides that a power unit that receives an active signal, such as a logical 1, at IN-FWD signal line will respond to messages directed to a second address) that causes power unit 406B to assign a second address to power unit 406B. In some non-limiting embodiments, when the IN-FWD signal line of input port 406-10A of data interface 406-10 of power unit 406B is energized, power unit 406B may assign the second address to power unit 406B based on unit controller 406-12 of power unit 406B storing data associated with the second address in a memory of unit controller 406-12.

In some non-limiting embodiments, cluster controller module 404-2 may repeat the process of the addressing scheme, by sending a message that includes successive addressing information that causes a power unit to assign a successive address to the power unit and a message directed to the respective address of the power unit that includes activation information that causes the power unit to activate a bus signal line, such as the OUT-FWD signal line, of an output port of the power unit, until all power units have been addressed. In some non-limiting embodiments, system controller 404-2 may end the process of the addressing scheme (e.g., determine the addressing scheme is complete) based on receiving a signal (e.g., an active signal, such as a logical 1) on the BWD signal line of data interface 404-10 which, as described above, is indicative of a last power unit in the series.

FIGS. 5A-5C are schematic diagrams of non-limiting embodiments of connection configurations of power units of electrical system 500. In some non-limiting embodiments, electrical system 500 may include system controller 504 and power units 506-1 through 506-N (referred to individually as power unit 506 and collectively as power units 506, where appropriate). In some non-limiting embodiments, electrical system 500 may be the same as similar to electrical system 100 and/or electrical system 400. For example, each of power units 506-1, 506-2, 506-3, and 506-N may be the same as or similar to power unit 106 and/or power unit 406. Additionally or alternatively, system controller 504 may be the same as or similar to cluster controller 104 and/or system controller 404-2. As shown in FIGS. 5A-5C, each of power units 506-1, 506-2, 506-3, and 506-N may include an input port such as data input ports 510A-1, 510A-2, 510A-3, and 510A-N, respectively, and an output port, such as data output ports 510B-1, 510B-2, 510B-3, and 510A-N, respectively, of a data interface. As shown in FIGS. 5A-5C, each of power units 506-1, 506-2, 506-3, and 506-N may include an input connection, such as an input connection defined by input lines 512A-11 and 512A-12, input lines 512A-21 and 512A-22, input lines 512A-31 and 512A-32, and input lines 512A-N1 and 512A-N2, respectively, and an output connection, such as an output connection defined by output lines 512B-11 and 512B-12, output lines 512B-21 and 512B-22, output lines 512B-31 and 512B-32, and output lines 512B-N1 and 512A-B2, respectively, to power module of each of power units 506-1, 506-2, 506-3, and 506-N.

In some non-limiting embodiments, an input port (e.g., data input ports 510A-1, 510A-2, 510A-3, 510A-N) of a data interface of power units 506-1, 506-2, 506-3, and 506-N may be the same as or similar to input port 110A and/or input port 406-10A as described herein. In some non-limiting embodiments, an output port (e.g., data output ports 510B-1, 510B-2, 510B-3, 510A-N) of a data interface of power units 506-1, 506-2, 506-3, and 506-N may be the same as or similar to output port 110B and/or output port 406-10B as described herein.

In some non-limiting embodiments, an input connection (e.g., input connections defined by input lines 512A-11 and 512A-12, input lines 512A-21 and 512A-22, input lines 512A-31 and 512A-32, and input lines 512A-N1 and 512A-N2) of power units 506-1, 506-2, 506-3, and 506-N may be the same as or similar to input connection 112A as described herein. In some non-limiting embodiments, an output connection (e.g., output connections defined by output lines 512B-11 and 512B-12, output lines 512B-21 and 512B-22, output lines 512B-31 and 512B-32, and output lines 512B-N1 and 512B-N2) of power units 506-1, 506-2, 506-3, and 506-N may be the same as or similar to output connection 112B as described herein.

Referring now to FIG. 5A, FIG. 5A is a diagram of a non-limiting embodiment of electrical system 500 in which a number of data interfaces of power units 506-1, 506-2, and 506-N are connected in a daisy-chain fashion beginning with power unit 506-1 and ending with power unit 506-N. As shown in FIG. 5A, system controller 504 may be connected to data input port 510A-1 of first power unit 506-1, output port 510B-1 of power unit 506-1 may connected to input port 510A-2 of power unit 506-2, and output port 510B-2 of power unit 506-2 may connected to input port 510A-N of power unit 506-N. In some non-limiting embodiments, additional power units 506 may connected in the same or similar fashion.

As shown in FIG. 5A, power units 506-1, 506-2, 506-N are connected in parallel with one another with respect to output connections defined by output lines 512B-11 and 512B-12, output lines 512B-21 and 512B-22, and output lines 512B-N1 and 512A-B2. As further shown in FIG. 5A, output line 512B-11 is connected to output line 512B-22, which is connected to output line 512B-N1, and output line 512B-12 is connected to output line 512B-21, which is connected to output line 512B-N2. As further shown in FIG. 5A, input line 512A-11 is connected to input line 512A-21, which is connected to input line 512A-N1, and input line 512A-12 is connected to input line 512A-21, which is connected to input line 512A-N2.

The connections of input lines 512A-11, 512A-21, 512A-N1, and input lines 512A-12, 512A-21, 512A-N2, respectively, are shown as wires "N" and "L" for input. The connections of output lines 512B-11, 512B-22, 512B-N1, and output lines 512B-12, 512B-21, 512B-N2, respectively, are shown as "L1" and "L2" for output. Since, in FIG. 5A, output is depicted as a floating (e.g., ungrounded) AC source, the wires are referred to as "L1" and "L2" whereas, on the input side, the power is assumed to come from the public AC grid and the wires are accordingly labeled as "N" and "L".

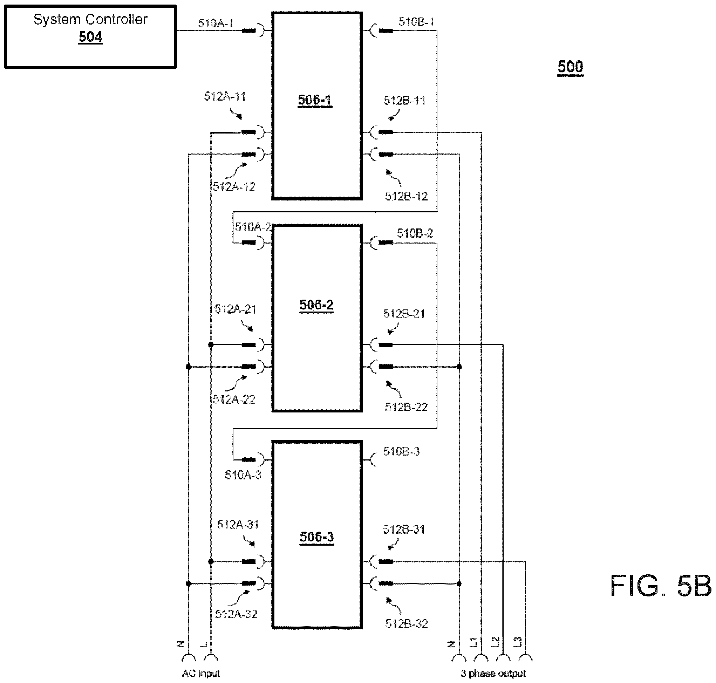

Referring now to FIG. 5B, FIG. 5B is a diagram of a non-limiting embodiment of electrical system 500 in which power units 506-1, 506-2, 506-3 are connected. As shown in FIG. 5B, the number of power units is 3 based on the supply of a 3-phase output. In some non-limiting embodiments, additional multiples of 3 power units may be used to supply a 3-phase output. In some non-limiting embodiments, an integer number above three power units (e.g., four power units) may be used (e.g., if phase imbalance is acceptable) for a multiple phase output. As shown in FIG. 5B, the data interfaces of power units 506-1, 506-2, and 506-3 are connected in a daisy-chain fashion beginning with power unit 506-1 and ending with power unit 506-3. As shown in FIG. 5B, system controller 504 may be connected to data input port 510A-1 of first power unit 506-1, output port 510B-1 of power unit 506-1 may connected to input port 510A-2 of power unit 506-2, and output port 510B-2 of power unit 506-2 may connected to input port 510A-3 of power unit 506-3. In some non-limiting embodiments, additional power units 506 (e.g., multiples of 3) may connected in the same or similar fashion.

As shown in FIG. 5B, input line 512A-11 is connected to input line 512A-21, which is connected to input line 512A-31, and input line 512A-12 is connected to input line 512A-21, which is connected to input line 512A-32. As further shown in FIG. 5B, output line 512B-11 (e.g., shown as line "L1") is not connected to output lines of power units 506-2 or 506-3, output line 512B-21 (e.g., shown as line "L2") is not connected to output lines of power units 506-1 or 506-3, and output line 512B-31 (e.g., shown as line "L3") is not connected to output lines of power units 506-1 or 506-2. As further shown in FIG. 5B, output line 512B-12 is connected to output line 512B-22, which is connected to output line 512B-32 (e.g., shown as line "N").

As shown in FIG. 5B, the output connections of power units 506-1, 506-2, 506-3 are connected in a star configuration (e.g., a parallel-star configuration) with respect to the power outputs. As further shown in FIG. 5B, the power output of power units 506-1, 506-2, 506-3 includes a three phase AC output.

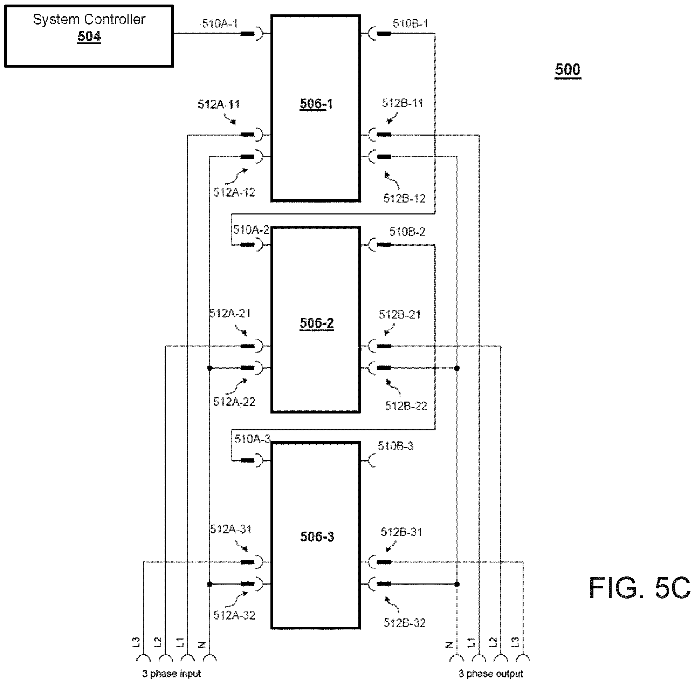

Referring now to FIG. 5C, FIG. 5C is a diagram of a non-limiting embodiment of electrical system 500 in which power units 506-1, 506-2, 506-3 are connected. As shown in FIG. 5C, the number of power units is 3 based on the receipt of a 3-phase input and the supply of a 3-phase output. In some non-limiting embodiments, additional multiples of 3 power units may be used to receive a 3-phase input and to supply a 3-phase output.

As shown in FIG. 5C, the data interfaces of power units 506-1, 506-2, and 506-3 are connected in a daisy-chain fashion beginning with power unit 506-1 and ending with power unit 506-3. As shown in FIG. 5C, system controller 504 may be connected to data input port 510A-1 of first power unit 506-1, output port 510B-1 of power unit 506-1 may connected to input port 510A-2 of power unit 506-2, and output port 510B-2 of power unit 506-2 may be connected to input port 510A-3 of power unit 506-3. In some non-limiting embodiments, additional power units 506 (e.g., multiples of 3) may connected in the same or similar fashion.

As shown in FIG. 5C, input line 512A-11 (e.g., shown as line "L1") is not connected to input lines of power units 506-2 or 506-3, input line 512A-21 (e.g., shown as line "L2") is not connected to input lines of power units 506-1 or 506-3, and input line 512A-31 (e.g., shown as line "L3") is not connected to input lines of power units 506-1 or 506-1. As further shown in FIG. 5C, output line 512B-11 (e.g., shown as line "L1") is not connected to output lines of power units 506-2 or 506-3, output line 512B-21 (e.g., shown as line "L2") is not connected to output lines of power units 506-1 or 506-3, and output line 512B-31 (e.g., shown as line "L3") is not connected to output lines of power units 506-1 or 506-2. As further shown in FIG. 5C, output line 512B-12 is connected to output line 512B-22, which is connected to output line 512B-32 (e.g., shown as line "N").

As shown in FIG. 5C, the input connections of power units 506-1, 506-2, 506-3 are connected in a star configuration (e.g., a parallel-star configuration) and the output connections of power units 506-1, 506-2, 506-3 are connected in a star configuration (e.g., a parallel-star configuration). As further shown in FIG. 5B, the power input of power units 506-1, 506-2, 506-3 includes a three phase AC input and the power output of power units 506-1, 506-2, 506-3 includes a three phase AC output.

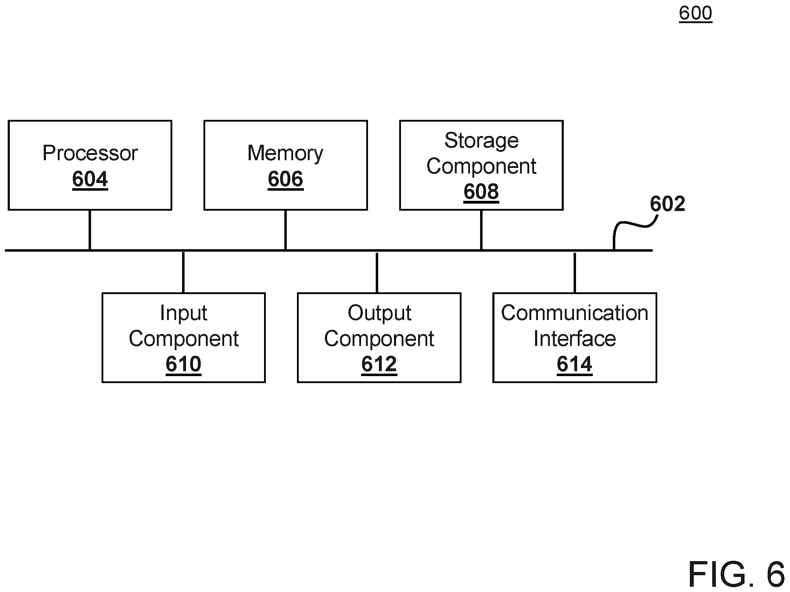

Referring now to FIG. 6, FIG. 6 is a diagram of example components of a device 600, according to non-limiting embodiments. Device 600 may correspond to at least one of unit controller 102, cluster controller 104, and/or power unit 106 shown in FIG. 1. In some non-limiting embodiments, such systems or devices may include at least one device 600 and/or at least one component of device 600. The number and arrangement of components shown in FIG. 6 are provided as an example. In some non-limiting embodiments, device 600 may include additional components, fewer components, different components, or differently arranged components than those shown in FIG. 6. Additionally or alternatively, a set of components (e.g., one or more components) of device 600 may perform one or more functions described as being performed by another set of components of device 600.

As shown in FIG. 6, device 600 may include bus 602, processor 604, memory 606, storage component 608, input component 610, output component 612, and communication interface 614. Bus 602 may include a component that permits communication among the components of device 600. In some non-limiting embodiments, processor 604 may be implemented in hardware, firmware, or a combination of hardware and software. For example, processor 604 may include a processor (e.g., a central processing unit (CPU), a graphics processing unit (GPU), an accelerated processing unit (APU), etc.), a microprocessor, a digital signal processor (DSP), and/or any processing component (e.g., a field-programmable gate array (FPGA), an application-specific integrated circuit (ASIC), etc.) that can be programmed perform a function. Memory 606 may include random access memory (RAM), read only memory (ROM), and/or another type of dynamic or static storage device (e.g., flash memory, magnetic memory, optical memory, etc.) that stores information and/or instructions for use by processor 604.

With continued reference to FIG. 6, storage component 608 may store information and/or software related to the operation and use of device 600. For example, storage component 608 may include a hard disk (e.g., a magnetic disk, an optical disk, a magneto-optic disk, a solid-state disk, etc.) and/or another type of computer-readable medium. Input component 610 may include a component that permits device 600 to receive information, such as via user input (e.g., a touch screen display, a keyboard, a keypad, a mouse, a button, a switch, a microphone, etc.). Additionally or alternatively, input component 610 may include a sensor for sensing information (e.g., a global positioning system (GPS) component, an accelerometer, a gyroscope, an actuator, etc.). Output component 612 may include a component that provides output information from device 600 (e.g., a display, a speaker, one or more light-emitting diodes (LEDs), etc.). Communication interface 614 may include a transceiver-like component (e.g., a transceiver, a separate receiver and transmitter, etc.) that enables device 600 to communicate with other devices, such as via a wired connection, a wireless connection, or a combination of wired and wireless connections. Communication interface 614 may permit device 600 to receive information from another device and/or provide information to another device. For example, communication interface 614 may include an Ethernet interface, an optical interface, a coaxial interface, an infrared interface, a radio frequency (RF) interface, a universal serial bus (USB) interface, a Wi-Fi^{®} interface, a cellular network interface, and/or the like.

Device 600 may perform one or more processes described herein. Device 600 may perform these processes based on processor 604 executing software instructions stored by a computer-readable medium, such as memory 606 and/or storage component 608. A computer-readable medium may include any non-transitory memory device. A memory device includes memory space located inside of a single physical storage device or memory space spread across multiple physical storage devices. Software instructions may be read into memory 606 and/or storage component 608 from another computer-readable medium or from another device via communication interface 614. When executed, software instructions stored in memory 606 and/or storage component 608 may cause processor 604 to perform one or more processes described herein. Additionally or alternatively, hardwired circuitry may be used in place of or in combination with software instructions to perform one or more processes described herein. Thus, embodiments described herein are not limited to any specific combination of hardware circuitry and software. The term "configured to," as used herein, may refer to an arrangement of software, device(s), and/or hardware for performing and/or enabling one or more functions (e.g., actions, processes, steps of a process, and/or the like). For example, "a processor configured to" may refer to a processor that executes software instructions (e.g., program code) that cause the processor to perform one or more functions.

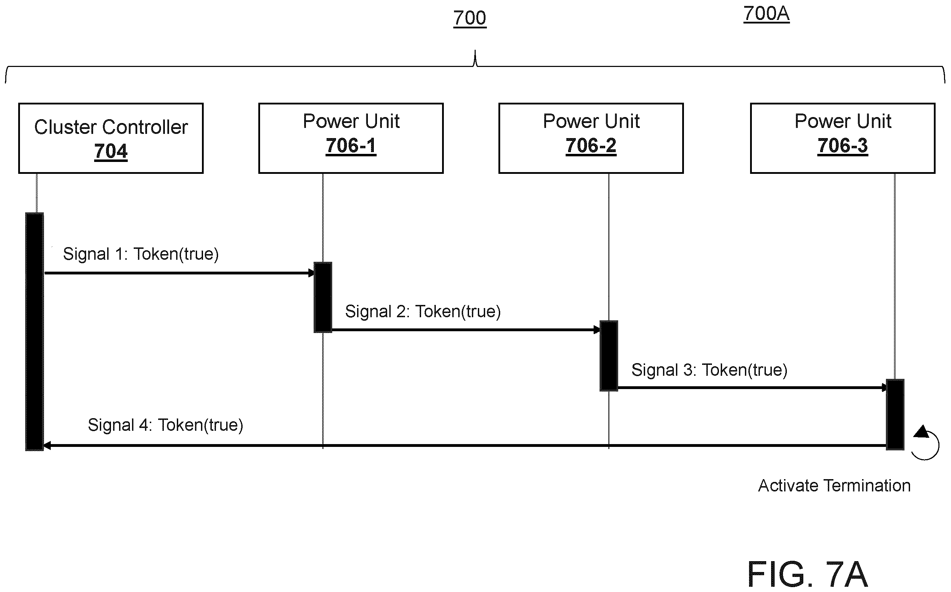

Referring now to FIGS. 7A-7B, described is an overview of an implementation of electrical system 700 that provides for operating one or more power units 706 of electrical system 700. As shown in FIGS. 7A-7B, electrical system 700 may include cluster controller 704, and power units 706-1 through 706-3 (referred to individually as power unit 706 and collectively as power units 706, where appropriate). In some non-limiting embodiments, electrical system 700 may be the same as or similar to electrical system 100 and/or electrical system 400. In some examples, cluster controller 704 may be the same as or similar to cluster controller 104 and/or cluster controller 404. In some examples, power units 706 may be the same as or similar to power unit 106 and/or power unit 406. While only three power units are shown, the relevant description would apply to an electrical system that includes additional power units connected (e.g., connected in series) as well.

Referring now to FIG. 7A, FIG. 7A is a diagram of implementation 700A of a process (e.g., process 200, a scheduling scheme, etc.) for scheduling one or more power units 706 of electrical system 700. As shown in FIG. 7A, cluster controller 704 may transmit a first signal to power unit 706-1. In some non-limiting embodiments, the first signal may include a token that has a value, such as "true." In some non-limiting embodiments, the token (e.g., the value of the token) may be used to determine whether a valid connection (e.g., that a connection between power units did not result in a timeout for a power unit) has been made between power units 706. For example, power unit 706 may receive a signal and determine whether the signal includes a token that has a predetermined value, such as a value of "true." In some non-limiting embodiments, the predetermined value of the token may be used to determine a scheme that is active. For example, the predetermined value of the token may be used to determine a scheduling scheme is active (e.g., as opposed to another scheme, such as an addressing or enumeration scheme). If power unit 706 determines that the signal includes a token that has the predetermined value, then power unit 706 may continue the scheduling scheme (e.g., power unit 706 may transmit another signal that includes a token that has the predetermined value). For example, power unit 706 could continue the scheduling scheme and transmit another signal if power unit 706 is not the last power unit in a series of power units. If power unit 706 is the last power unit in a series of power units, then power unit 706 may forego continuing the scheduling scheme (e.g., power unit 706 may forego transmitting another signal that includes a token that has the predetermined value) and may instead transmit a signal indicative of termination (e.g., completion of scheduling) back to cluster controller 704.

In some non-limiting embodiments, cluster controller 704 may activate a power supply line (e.g., a low voltage power supply line, a 12V power supply line, etc.) of a bus that connects cluster controller 704 to power unit 706-1 to initiate a scheduling scheme for scheduling for power units 706. In some non-limiting embodiments, power unit 706-1 (e.g., a unit controller of power unit 706-1) may activate a first circuit of power unit 706-1 based on (e.g., after) cluster controller 704 activating the power supply line of the bus. In some non-limiting embodiments, cluster controller 704 may transmit the first signal to power unit 706-1 after activating the power supply line of the bus. In some non-limiting embodiments, cluster controller 704 may transmit the first signal to power unit 706-1 via the bus (e.g., an enumeration bus). In some non-limiting embodiments, cluster controller 704 may activate the power supply line for a time interval (e.g., a predetermined time interval of a scheduling scheme, a predetermined time interval of a range of 10 ms to 1 second, such as 10 ms, 100 ms, 500 ms, etc., a predetermined time interval of a range of 1 second to 15 seconds, such as 3 seconds, 5 seconds, 10 seconds, etc.).

As further shown in FIG. 7A, power unit 706-1 may receive the first signal from cluster controller 704. In some non-limiting embodiments, power unit 706-1 may determine to generate a second signal (e.g., a second signal that includes a token with a predetermined value) based on receiving the first signal. In some non-limiting embodiments, power unit 706-1 may determine to generate the second signal based on determining whether another power unit is connected to power unit 706-1 (e.g., as described with regard to step 204 of process 200). For example, power unit 706-1 may determine to generate the second signal based on determining that power unit 706-2 is connected to power unit 706-1. In such an example, power unit 706-1 may forego operating the loop switching element of power unit 706-1 (e.g., as described with regard to step 208 of process 200) based on determining that power unit 706-2 is connected to power unit 706-1 and power unit 706-1 may generate the second signal based on foregoing operation of the loop switching element of power unit 706-1. As further shown in FIG. 7A, power unit 706-1 may transmit the second signal to power unit 706-2.

As further shown in FIG. 7A, power unit 706-2 may receive the second signal from power unit 706-1. In some non-limiting embodiments, power unit 706-2 may determine to generate a third signal (e.g., a third signal that includes a token with a predetermined value) based on receiving the second signal. In some non-limiting embodiments, power unit 706-2 may determine to generate the third signal based on determining whether another power unit is connected to power unit 706-2 (e.g., as described with regard to step 204 of process 200). For example, power unit 706-2 may determine to generate the second signal based on determining that power unit 706-3 is connected to power unit 706-2. In such an example, power unit 706-2 may forego operating the loop switching element of power unit 706-2 (e.g., as described with regard to step 208 of process 200) based on determining that power unit 706-3 is connected to power unit 706-2 and power unit 706-2 may generate the second signal based on foregoing operation of the loop switching element of power unit 706-2. As further shown in FIG. 7A, power unit 706-2 may transmit the third signal to power unit 706-3.

As further shown in FIG. 7A, power unit 706-3 may receive the third signal from power unit 706-2. In some non-limiting embodiments, power unit 706-3 may determine to activate a termination of power unit 706-3 based on receiving the third signal. For example, power unit 706-3 may determine to activate the termination of power unit 706-3 based on determining that another power unit is not connected to power unit 706-3 (e.g., as described with regard to step 204 of process 200). In such an example, power unit 706-3 may operate a loop switching element of power unit 706-3 (e.g., as described with regard to step 206 of process 200) based on determining that power unit 706-3 is not connected to another power unit and power unit 706-3 may generate a fourth signal (e.g., a fourth signal that includes a token with a predetermined value) based on operating the loop switching element of power unit 706-3. As further shown in FIG. 7A, power unit 706-3 may transmit the fourth signal to cluster controller 704.

As further shown in FIG. 7A, cluster controller 704 may receive the fourth signal from power unit 706-3. In some non-limiting embodiments, the token (e.g., the value of the token) included in the fourth signal may be used by cluster controller 704 to determine whether the fourth signal was provided via a valid connection from power unit 706-3. For example, cluster controller 704 may receive the fourth signal and determine whether the fourth signal includes the token that has a predetermined value, such as a value of "true." If cluster controller 704 determines that the fourth signal includes a token that has the predetermined value, then cluster controller 704 may determine that the scheduling scheme is complete (e.g., all power units 706 have been properly scheduled as part of the scheduling scheme). If cluster controller 704 determines that the fourth signal does not include a token that has the predetermined value, then cluster controller 704 may determine that the scheduling scheme is not complete (e.g., all power units 706 have not been properly scheduled as part of the scheduling scheme).

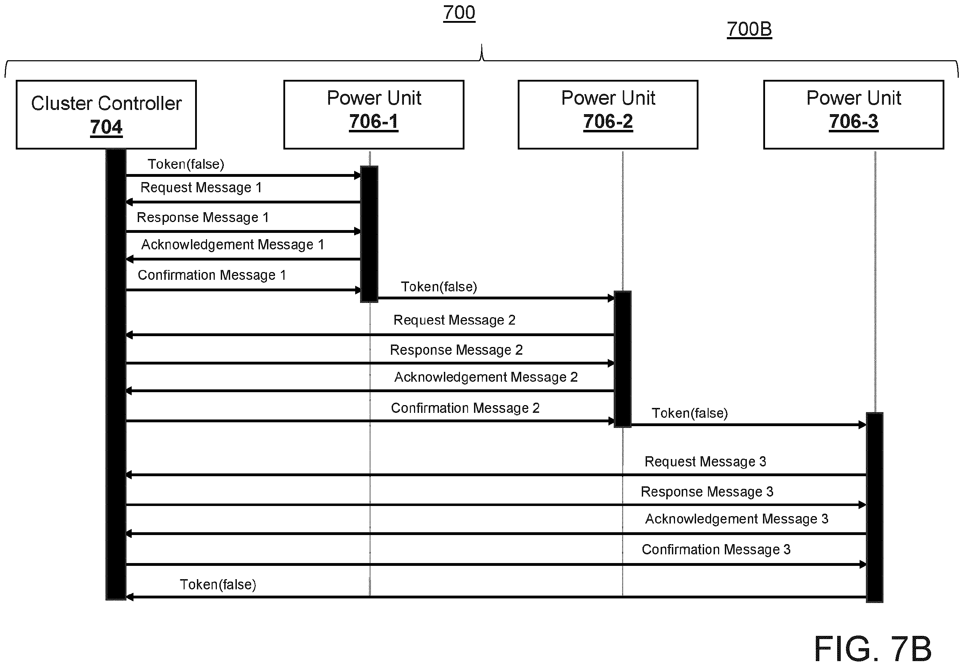

Referring now to FIG. 7B, FIG. 7B is a diagram of implementation 700B of a process (e.g., process 300, an addressing scheme, etc.) for addressing one or more power units 706 of electrical system 700. As shown in FIG. 7B, cluster controller 704 may transmit a first signal to power unit 706-1. In some non-limiting embodiments, the first signal may include a token that has a value, such as "false." In some non-limiting embodiments, the token (e.g., the value of the token) may be used to determine whether a valid connection (e.g., that a connection between power units did not result in a timeout for a power unit) has been made between power units 706. For example, power unit 706 may receive a signal and determine whether the signal includes a token that has a predetermined value, such as a value of "false." In some non-limiting embodiments, the predetermined value of the token may be used to determine a scheme that is active. For example, the predetermined value of the token may be used to determine an addressing scheme is active (e.g., as opposed to another scheme, such as a scheduling scheme). If power unit 706 determines that the signal includes a token that has the predetermined value, then power unit 706 may continue the addressing scheme (e.g., power unit 706 may transmit another signal that includes a token that has the predetermined value). If power unit 706 determines that the signal does not include a token that has the predetermined value, then power unit 706 may forego continuing the addressing scheme (e.g., power unit 706 may forego transmitting another signal that includes a token that has the predetermined value).

In some non-limiting embodiments, cluster controller 704 may activate (e.g., energize) a signal line (e.g., a signal line of a bus that connects cluster controller 704 and power units 706) of a bus that connects cluster controller 704 to power unit 706-1 to initiate an addressing scheme for addressing power units 706. In some non-limiting embodiments, cluster controller 704 may transmit the first signal based on (e.g., after) activating the signal line of the bus. In some non-limiting embodiments, cluster controller 704 may transmit the first signal to power unit 706-1 via the bus (e.g., a digital communication bus). In some non-limiting embodiments, cluster controller 704 may activate the signal line for a time interval (e.g., a predetermined time interval of a scheduling scheme, a predetermined time interval of a range of 10 ms to 1 second, such as 10 ms, 100 ms, 500 ms, etc., a predetermined time interval of a range of 1 second to 15 seconds, such as 3 seconds, 5 seconds, 10 seconds, etc.).

As further shown in FIG. 7B, power unit 706-1 may transmit a first request message (e.g., a message that includes a request for addressing information) to cluster controller 704. In some non-limiting embodiments, power unit 706-1 may transmit the first request message based on receiving a token with a predetermined value. As further shown in FIG. 7B, cluster controller 704 may transmit a first response message that includes addressing information to power unit 706-1. In some non-limiting embodiments, cluster controller 704 may transmit the first response message according to a communication protocol of the bus. In some non-limiting embodiments, the addressing information may include information that causes power unit 706-1 to assign a first address to power unit 706-1. In some non-limiting embodiments, based on the signal line of power unit 706-1 being energized, power unit 706-1 may assign the first address to power unit 706-1. In some non-limiting embodiments, a unit controller of power unit 706-1 may store data associated with the first address in a memory of the unit controller of power unit 706-1. As further shown in FIG. 7B, power unit 706-1 may transmit a first acknowledgement message (e.g., a message that includes an acknowledgment of receipt and/or assignment of the addressing information) to cluster controller 704. In some non-limiting embodiments, power unit 706-1 may transmit the first acknowledgment message based on receiving the first response message. As further shown in FIG. 7B, cluster controller 704 may transmit a first confirmation message (e.g., a message that includes a confirmation of the acknowledgment of receipt and/or assignment of the addressing information) to power unit 706-1. In some non-limiting embodiments, cluster controller 704 may transmit the first confirmation message based on receiving the first acknowledgment message.

In some non-limiting embodiments, cluster controller 704 may deactivate the signal line of the bus that connects cluster controller 704 and power unit 706-1. For example, cluster controller 704 may deactivate the signal line based on transmitting the first response message and/or the first confirmation message.

In some non-limiting embodiments, cluster controller 704 may activate the signal line of the bus that connects cluster controller 704 to power unit 706-2 to proceed with the addressing scheme for addressing for power units 706. In some non-limiting embodiments, power unit 706-1 (e.g., a unit controller of power unit 706-1) may transmit a second signal based on (e.g., after) activation of the signal line of the bus. As further shown in FIG. 7B, power unit 706-1 may transmit the second signal to power unit 706-2 that includes a token with a predetermined value (e.g., a value of "false"). In some non-limiting embodiments, power unit 706-1 may transmit the second signal to power unit 706-2 via the bus. In some non-limiting embodiments, cluster controller 704 may activate the signal line for a time interval (e.g., a predetermined time interval of a scheduling scheme, a predetermined time interval of a range of 10 ms to 1 second, such as 10 ms, 100 ms, 500 ms, etc., a predetermined time interval of a range of 1 second to 15 seconds, such as 3 seconds, 5 seconds, 10 seconds, etc.).

As further shown in FIG. 7B, power unit 706-2 may transmit a second request message to cluster controller 704. In some non-limiting embodiments, power unit 706-2 may transmit the second request message based on receiving the token with the predetermined value. As further shown in FIG. 7B, cluster controller 704 may transmit a second response message that includes addressing information to power unit 706-2. In some non-limiting embodiments, cluster controller 704 may transmit the second response message according to a communication protocol of the bus. In some non-limiting embodiments, the addressing information may include information that causes power unit 706-2 to assign a second address to power unit 706-2. In some non-limiting embodiments, based on the signal line of power unit 706-2 being energized, power unit 706-2 may assign the second address to power unit 706-2. In some non-limiting embodiments, a unit controller of power unit 706-2 may store data associated with the second address in a memory of the unit controller of power unit 706-2. As further shown in FIG. 7B, power unit 706-2 may transmit a second acknowledgement message to cluster controller 704. In some non-limiting embodiments, power unit 706-2 may transmit the second acknowledgment message based on receiving the second response message. As further shown in FIG. 7B, cluster controller 704 may transmit a second confirmation message to power unit 706-2. In some non-limiting embodiments, cluster controller 704 may transmit the second confirmation message based on receiving the second acknowledgment message.

In some non-limiting embodiments, cluster controller 704 may deactivate the signal line of the bus that connects cluster controller 704 and power unit 706-2. For example, cluster controller 704 may deactivate the signal line based on transmitting the second response message and/or the second confirmation message.

In some non-limiting embodiments, cluster controller 704 may activate the signal line of the bus that connects cluster controller 704 to power unit 706-3 to proceed with the addressing scheme for addressing for power units 706. In some non-limiting embodiments, power unit 706-2 (e.g., a unit controller of power unit 706-2) may transmit a third signal based on (e.g., after) activation of the signal line of the bus. As further shown in FIG. 7B, power unit 706-2 may transmit the third signal to power unit 706-3 that includes a token with a predetermined value (e.g., a value of "false"). In some non-limiting embodiments, power unit 706-2 may transmit the third signal to power unit 706-3 via the bus. In some non-limiting embodiments, cluster controller 704 may activate the signal line for a time interval (e.g., a predetermined time interval of a scheduling scheme, a predetermined time interval of a range of 10 ms to 1 second, such as 10 ms, 100ms, 500 ms, etc., a predetermined time interval of a range of 1 second to 15 seconds, such as 3 seconds, 5 seconds, 10 seconds, etc.).

As further shown in FIG. 7B, power unit 706-3 may transmit a third request message to cluster controller 704. In some non-limiting embodiments, power unit 706-3 may transmit the third request message based on receiving the token with the predetermined value. As further shown in FIG. 7B, cluster controller 704 may transmit a third response message that includes addressing information to power unit 706-3. In some non-limiting embodiments, cluster controller 704 may transmit the third response message according to a communication protocol of the bus. In some non-limiting embodiments, the addressing information may include information that causes power unit 706-3 to assign a third address to power unit 706-3. In some non-limiting embodiments, based on the signal line of power unit 706-3 being energized, power unit 706-3 may assign the third address to power unit 706-3. In some non-limiting embodiments, a unit controller of power unit 706-3 may store data associated with the third address in a memory of the unit controller of power unit 706-3. As further shown in FIG. 7B, power unit 706-3 may transmit a third acknowledgement message to cluster controller 704. In some non-limiting embodiments, power unit 706-3 may transmit the third acknowledgment message based on receiving the third response message. As further shown in FIG. 7B, cluster controller 704 may transmit a third confirmation message to power unit 706-3. In some non-limiting embodiments, cluster controller 704 may transmit the third confirmation message based on receiving the third acknowledgment message.

In some non-limiting embodiments, cluster controller 704 may deactivate the signal line of the bus that connects cluster controller 704 and power unit 706-3. For example, cluster controller 704 may deactivate the signal line based on transmitting the third response message and/or the third confirmation message. As further shown in FIG. 7B, power unit 706-3 may transmit a fourth signal to cluster controller 704 that includes a token with a predetermined value (e.g., a value of "false"). In some non-limiting embodiments, power unit 706-3 may transmit the fourth signal to cluster controller 704 via the bus.

In some non-limiting embodiments, one or more devices that do not need addressing (e.g., devices other than power units 706) may be connected in series with power units 706. Such devices can act as a gateway and pass the signals (e.g., tokens) related to addressing discussed above to the next device (which may be a power unit 706) so that such devices are not assigned an address. Such devices can, however, send signals related to scheduling and can, for example, sent a signal indicating that it is the last device in a series, thereby initiating termination of the scheduling process.

Further non-limiting embodiments or aspects are set forth in the following numbered clauses:
Clause 1: An electrical system, comprising: a system controller comprising a first data interface; and a second bus, wherein the second bus is connected to system controller via the first data interface; an electrical unit, the electrical unit comprising: a second data interface comprising an input port and an output port; a unit controller; and an enumeration detector comprising a receiver circuit connected at the input port; wherein the input port is connected to the first data interface via the second bus such that the receiver circuit is connected to the second bus, thereby providing a communication connection between the system controller and the electrical unit, wherein the communication connection causes the receiver circuit to provide a signal to the unit controller, wherein the signal is indicative of the system controller being connected upstream of the electrical unit, which enables an electrical connection at the output port which is usable by another electrical unit for detecting a connection to the electrical unit.
Clause 2: An electrical system, comprising: a system controller comprising: a first data interface; a first bus and a second bus, wherein the first bus and the second bus are connected to system controller via the first data interface; a first electrical unit, the first electrical unit comprising: a second data interface comprising an input port and an output port; a unit bus section between the input port and the output port; a unit controller that is connected to the unit bus section; and an enumeration detector comprising a receiver circuit connected at the input port; wherein the input port is connected to the first data interface via the first bus and the second bus such that the unit bus section is connected to the first bus, and the receiver circuit is connected to the second bus, thereby providing a communication connection between the system controller and the first electrical unit, wherein the communication connection causes the receiver circuit to provide a signal to the unit controller, wherein the signal is indicative of the system controller being connected upstream of the first electrical unit, which enables an electrical connection at the output port which is usable by a second electrical unit for detecting a connection to the first electrical unit.
Clause 3: The electrical system of clause 1 or 2, wherein the enumeration detector comprises a sender circuit, and wherein the unit controller is configured to activate the sender circuit based on receiving the signal.
Clause 4: The electrical system of any of clauses 1-3, wherein the receiver circuit comprises an optocoupler.
Clause 5: The electrical system of any of clauses 1-4, wherein the enumeration detector comprises a driver switching element, wherein the signal is a first signal, and wherein the unit controller or the system controller is configured to: activate the driver switching element based on receiving the first signal from the receiver circuit; determine whether to operate a loop switching element of the first electrical unit based on determining whether a second electrical unit is connected, wherein the loop switching element has a first state and a second state, wherein, when in the first state, the loop switching element is closed to provide an electrical signal path between the first electrical unit and the system controller to cause a second signal to flow from the first electrical unit to the system controller, wherein, when in the second state, the loop switching element is open to prevent the second signal from flowing in the electrical signal path from the first electrical unit to the system controller.
Clause 6: The electrical system of any of clauses 1-5, wherein, when determining whether the second electrical unit is connected to the first electrical unit at the output port of the first electrical unit, the unit controller or the system controller is further configured to: determine that the second electrical unit is connected to the first electrical unit at the output port of the first electrical unit based on a first output of a detector element of the first electrical unit, wherein the first output of the detector element is indicative of electrical current flowing through the detector element; or determine that the second electrical unit is not connected to the first electrical unit at the output port of the first electrical unit based on a second output of the detector element of the first electrical unit, wherein the second output of the detector element is indicative of electrical current not flowing through the detector element.
Clause 7: The electrical system of any of clauses 1-6, wherein the driver switching element or the detector element comprises an optocoupler.
Clause 8: The electrical system of any of clauses 1-7, wherein, when determining whether to operate the loop switching element of the first electrical unit based on determining whether the second electrical unit is connected, the unit controller or the system controller is further configured to: determine to operate the loop switching element of the first electrical unit so that the loop switching element is in the first state to provide the electrical signal path between the first electrical unit and the system controller and to cause the second signal to flow from the first electrical unit to the system controller via the electrical signal path based on determining that the second electrical unit is not connected at the output port of the first electrical unit; or determine not to operate the loop switching element of the first electrical unit so that the loop switching element is in in the second state to prevent the second signal from flowing from the first electrical unit to the system controller based on determining that the second electrical unit is connected at the output port of the first electrical unit.
Clause 9: The electrical system of any of clauses 1-8, wherein the unit controller is further configured to: receive a message from the system controller, wherein the message includes addressing information that causes the unit controller to assign an address to the first electrical unit based on a signal line of the input port being energized.
Clause 10: The electrical system of any of clauses 1-9, wherein the unit controller is further configured to: activate an output port of the second data interface of the first electrical unit based on receiving a message directed to the address of the first electrical unit, wherein the message includes activation information that causes wherein the unit controller to activate the output port of the first electrical unit.
Clause 11: The electrical system of any of clauses 1-10, wherein the system controller is further configured to: activate a power supply line of the first bus that connects the system controller to the first electrical unit; and provide an initial signal on a signal line of the second bus to the receiver circuit to cause the receiver circuit to provide the signal to the unit controller.
Clause 12: The electrical system of any of clauses 1-11, wherein the signal line of the second bus is a first signal line of the second bus, wherein the signal is a first signal, and wherein the system controller is further configured to: receive a second signal on a second signal line of the second bus; and determine that a scheduling scheme has been completed based on receiving the second signal.
Clause 13: The electrical system of any of clauses 1-12, wherein the system controller is further configured to: activate a bus signal line of the first bus; and transmit a first message to the first electrical unit, wherein the first message includes addressing information that causes the first electrical unit to assign a first address to the first electrical unit based on the bus signal line of the first bus being active.
Clause 14: The electrical system of any of clauses 1-13, wherein the system controller is further configured to: deactivate the bus signal line of the first bus that connects the system controller to the input port of the first electrical unit; and transmit a second message to the first electrical unit, wherein the second message includes activation information that causes the first electrical unit to activate an output port of the first electrical unit.
Clause 15: The electrical system of any of clauses 1-14, wherein the system controller is further configured to: transmit a third message, wherein the third message includes second addressing information that causes the second electrical unit to assign a second address to the second electrical unit.
Clause 16: A method for operating an electrical system, comprising: receiving, with at least one processor of a first electrical unit of an electrical system, data associated with a first electrical signal provided on a first electrical signal path of a bus, wherein the first electrical unit is connected to and in communication with a system controller of the electrical system via the bus; activating, with the at least one processor, a driver switching element of the first electrical unit based on receiving the first electrical signal on the first electrical signal path from the system controller; determining, with the at least one processor, whether a second electrical unit is connected to the first electrical unit at an output port of the first electrical unit based on a detector element of the first electrical unit; and determining, with the at least one processor, whether to operate a loop switching element of the first electrical unit based on determining whether the second electrical unit is connected, wherein the loop switching element has a first state and a second state, wherein, when in the first state, the loop switching element is closed to provide a second electrical signal path between the first electrical unit and the system controller to cause a second electrical signal to flow from the first electrical unit to the system controller, and wherein, when in the second state, the loop switching element is open to prevent the second electrical signal from flowing in the second electrical signal path from the first electrical unit to the system controller.
Clause 17: The method of clause 16, wherein determining whether the second electrical unit is connected to the first electrical unit at the output port of the first electrical unit comprises: determining that the second electrical unit is connected to the first electrical unit at the output port of the first electrical unit based on a first output of the driver switching element of the first electrical unit, wherein the first output of the driver switching element is indicative of electrical current flowing through the driver switching element.
Clause 18: The method of clauses 16 or 17, wherein determining whether the second electrical unit is connected to the first electrical unit at the output port of the first electrical unit comprises: determining that the second electrical unit is not connected to the first electrical unit at the output port of the first electrical unit based on a second output of the driver switching element of the first electrical unit, wherein the second output of the driver switching element is indicative of electrical current not flowing through the driver switching element.
Clause 19: The method of any of clauses 16-18, wherein determining whether to operate the detector element of the first electrical unit based on determining whether the second electrical unit is connected comprises: determining to operate the detector element of the first electrical unit to provide the second electrical signal path between the first electrical unit and the system controller to cause the second electrical signal to flow from the first electrical unit to the system controller based on determining that the second electrical unit is not connected at the output port of the first electrical unit.
Clause 20: The method of any of clauses 16-19, further comprising: receiving, at an input port of a data interface of the first electrical unit, a message from the system controller, wherein the message includes addressing information that causes the first electrical unit to assign an address to the first electrical unit based on a signal line of the input port being energized.
Clause 21: The method of any of clauses 16-20, further comprising: activating an output port of the data interface of the first electrical unit based on receiving a message directed to the address of the first electrical unit, wherein the message includes activation information that causes the first electrical unit to activate the output port of the first electrical unit.
Clause 22: An electrical system comprising: a controller configured to: activate a driver switching element of a first electrical unit based on receiving data associated with a first signal provided on a first electrical signal path of a bus of the electrical system; determine whether a second electrical unit is connected to the first electrical unit based on the driver switching element; and determine whether to operate a loop switching element of the first electrical unit based on determining whether the second electrical unit is connected to the first electrical unit, wherein the loop switching element has a first state and a second state, wherein, when in the first state, the loop switching element is closed to provide a second electrical signal path between the first electrical unit and the system controller to cause a second signal to flow from the first electrical unit to a system controller of the electrical system, and wherein, when in the second state, the loop switching element is open to prevent the second signal from flowing in the second electrical signal path from the first electrical unit to the system controller.
Clause 23: The electrical system of clause 22, wherein, when determining whether the second electrical unit is connected to the first electrical unit at the output port of the first electrical unit, the controller is configured to: determine that the second electrical unit is connected to the first electrical unit at the output port of the first electrical unit based on a first output of a detector element of the first electrical unit, wherein the detector element is connected to the driver switching element and receives an electrical current from the driver switching element when the driver switching element is activated, and wherein the first output of the detector element is indicative of electrical current flowing through the driver switching element; or determine that the second electrical unit is not connected to the first electrical unit at the output port of the first electrical unit based on a second output of the detector element of the first electrical unit, wherein the second output of the detector element is indicative of electrical current not flowing through the detector element.
Clause 24: The electrical system of clauses 22 or 23, wherein, when determining whether to operate the loop switching element of the first electrical unit based on determining whether the second electrical unit is connected, the controller is configured to: determine to operate the loop switching element of the first electrical unit so that the loop switching element is in the first state to provide the second electrical signal path between the first electrical unit and the system controller and to cause the second electrical signal to flow from the first electrical unit to the system controller based on determining that the second electrical unit is not connected at the output port of the first electrical unit; or determine not to operate the loop switching element of the first electrical unit so that the loop switching element is in in the second state to prevent the second electrical signal from flowing from the first electrical unit to the system controller based on determining that the second electrical unit is connected at the output port of the first electrical unit.
Clause 25: System comprising means for performing the steps of any of the herein disclosed methods, e.g., method steps.
Clause 26: A software product comprising instructions for performing the steps of any of the above method clauses.
Clause 27: A software product comprising instructions which when executed by a suitable processor or electrical system, causes the processor or the electrical system to perform the herein disclosed methods, e.g., method steps.

Although embodiments have been described in detail for the purpose of illustration, it is to be understood that such detail is solely for that purpose and that the disclosure is not limited to the disclosed embodiments or aspects, but, on the contrary, is intended to cover modifications and equivalent arrangements that are within the spirit and scope of the appended claims. For example, it is to be understood that the present disclosure contemplates that, to the extent possible, one or more features of any embodiment or aspect can be combined with one or more features of any other embodiment or aspect.

## Claims

1. An electrical system, comprising:
a system controller comprising:
a first data interface;
a first bus and a second bus, wherein the first bus and the second bus are connected to system controller via the first data interface;
a first electrical unit, the first electrical unit comprising:
a second data interface comprising an input port and an output port;
a unit bus section between the input port and the output port;
a unit controller that is connected to the unit bus section; and
an enumeration detector comprising a receiver circuit connected at the input port;
wherein the input port is connected to the first data interface via the first bus and the second bus such that the unit bus section is connected to the first bus, and the receiver circuit is connected to the second bus, thereby providing a communication connection between the system controller and the first electrical unit, wherein the communication connection causes the receiver circuit to provide a signal to the unit controller, wherein the signal is indicative of the system controller being connected upstream of the first electrical unit, which enables an electrical connection at the output port which is usable by a second electrical unit for detecting a connection to the first electrical unit.

2. The electrical system of claim 1, wherein the enumeration detector comprises a sender circuit, and wherein the unit controller is configured to activate the sender circuit based on receiving the signal.

3. The electrical system of either of claims 1 or 2, wherein the enumeration detector comprises a driver switching element, wherein the signal is a first signal, and wherein the unit controller or the system controller is configured to:
activate the driver switching element based on receiving the first signal from the receiver circuit;
determine whether to operate a loop switching element of the first electrical unit based on determining whether the second electrical unit is connected, wherein the loop switching element has a first state and a second state,
wherein, when in the first state, the loop switching element is closed to provide an electrical signal path between the first electrical unit and the system controller to cause a second signal to flow from the first electrical unit to the system controller, and
wherein, when in the second state, the loop switching element is open to prevent the second signal from flowing in the electrical signal path from the first electrical unit to the system controller.

4. The electrical system of claim 3, wherein, when determining whether the second electrical unit is connected to the first electrical unit at the output port of the first electrical unit, the unit controller or the system controller is further configured to:
determine that the second electrical unit is connected to the first electrical unit at the output port of the first electrical unit based on a first output of a detector element of the first electrical unit, wherein the first output of the detector element is indicative of electrical current flowing through the detector element; or
determine that the second electrical unit is not connected to the first electrical unit at the output port of the first electrical unit based on a second output of the detector element of the first electrical unit, wherein the second output of the detector element is indicative of electrical current not flowing through the detector element.

5. The electrical system of claim 3 or 4, wherein, when determining whether to operate the loop switching element of the first electrical unit based on determining whether the second electrical unit is connected, the unit controller or the system controller is further configured to:
determine to operate the loop switching element of the first electrical unit so that the loop switching element is in the first state to provide the electrical signal path between the first electrical unit and the system controller and to cause the second signal to flow from the first electrical unit to the system controller via the electrical signal path based on determining that a second electrical unit is not connected at the output port of the first electrical unit; or
determine not to operate the loop switching element of the first electrical unit so that the loop switching element is in in the second state to prevent the second signal from flowing from the first electrical unit to the system controller based on determining that a second electrical unit is connected at the output port of the first electrical unit.

6. The electrical system of any of claims 1-5, wherein the unit controller is further configured to:
receive a message from the system controller, wherein the message includes addressing information that causes the unit controller to assign an address to the first electrical unit based on a signal line of the input port being energized; and
activate an output port of the second data interface of the first electrical unit based on receiving a message directed to the address of the first electrical unit, wherein the message includes activation information that causes the unit controller to activate the output port of the first electrical unit.

7. The electrical system of any of claims 1-6, wherein the system controller is further configured to:
activate a power supply line of the first bus that connects the system controller to the first electrical unit; and
provide an initial signal on a signal line of the second bus to the receiver circuit to cause the receiver circuit to provide the signal to the unit controller,
wherein the signal line of the second bus is a first signal line of the second bus, wherein the signal is a first signal, and wherein the system controller is further configured to:
receive a second signal on a second signal line of the second bus; and
determine that a scheduling scheme has been completed based on receiving the second signal.

8. The electrical system of any of claims 1-7, wherein the system controller is further configured to:
activate a bus signal line of the first bus;
transmit a first message to the first electrical unit, wherein the first message includes addressing information that causes the first electrical unit to assign a first address to the first electrical unit based on the bus signal line of the first bus being active;
deactivate the bus signal line of the first bus that connects the system controller to the input port of the first electrical unit;
transmit a second message to the first electrical unit, wherein the second message includes activation information that causes the first electrical unit to activate an output port of the first electrical unit; and
transmit a third message, wherein the third message includes second addressing information that causes the second electrical unit to assign a second address to the second electrical unit.

9. A method for operating an electrical system, comprising:
receiving, with at least one processor of a first electrical unit of an electrical system, data associated with a first electrical signal provided on a first electrical signal path of a bus, wherein the first electrical unit is connected to and in communication with a system controller of the electrical system via the bus;
activating, with the at least one processor, a driver switching element of the first electrical unit based on receiving the first electrical signal on the first electrical signal path from the system controller;
determining, with the at least one processor, whether a second electrical unit is connected to the first electrical unit at an output port of the first electrical unit based on a detector element of the first electrical unit; and
determining, with the at least one processor, whether to operate a loop switching element of the first electrical unit based on determining whether the second electrical unit is connected, wherein the loop switching element has a first state and a second state,
wherein, when in the first state, the loop switching element is closed to provide a second electrical signal path between the first electrical unit and the system controller to cause a second electrical signal to flow from the first electrical unit to the system controller, and
wherein, when in the second state, the loop switching element is open to prevent the second electrical signal from flowing in the second electrical signal path from the first electrical unit to the system controller.

10. The method of claim 9, wherein determining whether the second electrical unit is connected to the first electrical unit at the output port of the first electrical unit comprises:
determining that the second electrical unit is connected to the first electrical unit at the output port of the first electrical unit based on a first output of the driver switching element of the first electrical unit, wherein the first output of the driver switching element is indicative of electrical current flowing through the driver switching element.

11. The method of either of claims 9 or 10, wherein determining whether the second electrical unit is connected to the first electrical unit at the output port of the first electrical unit comprises:
determining that the second electrical unit is not connected to the first electrical unit at the output port of the first electrical unit based on a second output of the driver switching element of the first electrical unit, wherein the second output of the driver switching element is indicative of electrical current not flowing through the driver switching element.

12. The method of any of claims 9-11, wherein determining whether to operate the detector element of the first electrical unit based on determining whether the second electrical unit is connected comprises:
determining to operate the detector element of the first electrical unit to provide the second electrical signal path between the first electrical unit and the system controller to cause the second electrical signal to flow from the first electrical unit to the system controller based on determining that the second electrical unit is not connected at the output port of the first electrical unit.

13. The method of any of claims 9-12, further comprising:
receiving, at an input port of a data interface of the first electrical unit, a message from the system controller, wherein the message includes addressing information that causes the first electrical unit to assign an address to the first electrical unit based on a signal line of the input port being energized; and
activating an output port of the data interface of the first electrical unit based on receiving a message directed to the address of the first electrical unit, wherein the message includes activation information that causes the first electrical unit to activate the output port of the first electrical unit.

14. A system comprising the means to perform the steps of any of the above method claims.

15. A computer program product comprising instructions for performing the steps of any of the above method claims.
